# EUROPEAN PATENT APPLICATION

(11) **EP 4 513 910 A1**
(43) Date of publication of application: **26.02.2025**
(21) Application number: 23838900.1
(22) Date of filing: 10.07.2023
(51) Int. Cl.: H04W 4/80

(54) **METHOD FOR IMPLEMENTING LOW-POWER-CONSUMPTION OPERATION OF BLUETOOTH DEVICE, AND RELATED APPARATUS**

(30) Priority: 12.07.2022 CN 202210815750
(71) Applicant: Huawei Technologies Co., Ltd., Shenzhen, Guangdong 518129 (CN)
(72) Inventor: XU, Tianliang, Shenzhen, Guangdong 518129 (CN); YANG, Lin, Shenzhen, Guangdong 518129 (CN)
(74) Representative: Körber, Martin Hans
(86) International application number: PCT/CN2023/106574
(87) International publication number: WO 2024/012408

(57) **Abstract**

This application provides a method for implementing low-power-consumption operation of a Bluetooth device and a related apparatus. After a first electronic device establishes a first Bluetooth connection to a second electronic device, the first electronic device may disconnect the first Bluetooth connection when a first condition is met. After the first Bluetooth connection is disconnected, the first electronic device may periodically send a second broadcast packet to the second electronic device, to implement device keep-alive. The second broadcast packet carries a first interval value, and the first interval value indicates an interval for sending the second broadcast packet by the first electronic device. According to the method, when no data is generated or a smart gateway does not send a control instruction to the Bluetooth device, the Bluetooth device may actively disconnect a Bluetooth connection to reduce power consumption of the Bluetooth device, thereby achieving an objective of energy saving and prolonging a service life of the device.

## Description

This application claims priority to Chinese Patent Application No. 202210815750.9, filed with the China National Intellectual Property Administration on July 12, 2022 and entitled "METHOD FOR IMPLEMENTING LOW-POWER-CONSUMPTION OPERATION OF BLUETOOTH DEVICE AND RELATED APPARATUS", which is incorporated herein by reference in its entirety.

### TECHNICAL FIELD

This application relates to the field of Bluetooth technologies, and in particular, to a method for implementing low-power-consumption operation of a Bluetooth device and a related apparatus.

### BACKGROUND

With development of terminal technologies, there are more types of electronic devices, and functions of the electronic devices are increasingly diversified. Communication between the electronic devices is implemented by using a Bluetooth (Bluetooth, BT) technology.

The Bluetooth technology is a radio technology that supports short-range (for example, within 10 m) communication between devices. For example, a Bluetooth device may establish a Bluetooth connection to a smart gateway, so that a user can control the Bluetooth device by using the smart gateway, or the Bluetooth device exchanges data with a server or another device via the smart gateway.

Currently, after a Bluetooth function is enabled, the Bluetooth device needs to periodically send a broadcast message, so that the smart gateway can discover the Bluetooth device and establish the Bluetooth connection to the Bluetooth device. Then, the Bluetooth device and the smart gateway need to maintain the Bluetooth connection, so that the smart gateway can control the Bluetooth device or forward the data exchanged between the Bluetooth device and the server or the another device. This process increases power consumption of the Bluetooth device. Therefore, how to reduce the power consumption of the Bluetooth device while ensuring normal interaction between the smart gateway and the Bluetooth device is an urgent problem to be resolved.

### SUMMARY

This application provides a method for implementing low-power-consumption operation of a Bluetooth device and a related apparatus. When no data is generated or a smart gateway does not send a control instruction to the Bluetooth device, the Bluetooth device actively disconnects a Bluetooth connection to reduce power consumption of the Bluetooth device, thereby achieving an objective of energy saving and prolonging a service life of the device.

According to a first aspect, this application provides a method for implementing low-power-consumption operation of a Bluetooth device. The method includes: A first electronic device sends a first broadcast packet to a second electronic device, where the first broadcast packet is used to establish a first Bluetooth connection to the second electronic device; after the first electronic device establishes the first Bluetooth connection to the second electronic device, the first electronic device disconnects the first Bluetooth connection when a first condition is met; and after the first Bluetooth connection is disconnected, the first electronic device periodically sends a second broadcast packet to the second electronic device. The second broadcast packet carries a first interval value, and the first interval value indicates an interval for sending the second broadcast packet by the first electronic device.

The first electronic device may be a Bluetooth device, and the second electronic device may be a smart gateway.

The first Bluetooth connection may be a persistent Bluetooth connection between the first electronic device and the second electronic device.

According to the method provided in the first aspect, the first electronic device actively disconnects the Bluetooth connection to the second electronic device when the first condition is met, to reduce power consumption of the first electronic device, thereby achieving an objective of energy saving. After the Bluetooth connection is disconnected, the first electronic device periodically sends the second broadcast packet to the second electronic device, to notify the second electronic device that the first electronic device is still connectable at this moment. This implements device keepalive. In some cases, the second electronic device does not need to reconnect to the first electronic device.

With reference to the first aspect, in a possible implementation, after that the first electronic device periodically sends a second broadcast packet to the second electronic device, the method further includes: The first electronic device sends a third broadcast packet to the second electronic device. The third broadcast packet carries a first reconnection identifier, and the first reconnection identifier indicates the second electronic device to establish a second Bluetooth connection to the first electronic device.

In this way, the first electronic device may actively send the third broadcast packet to the second electronic device, to request to reconnect to the second electronic device.

With reference to the first aspect, in a possible implementation, after the first electronic device establishes the second Bluetooth connection to the second electronic device, the method further includes: The first electronic device stops sending the second broadcast packet.

In this way, the first electronic device sends the second broadcast packet to the second electronic device only after the first electronic device disconnects the Bluetooth connection to the second electronic device, to implement device keepalive.

With reference to the first aspect, in a possible implementation, after that the first electronic device periodically sends a second broadcast packet to the second electronic device, the method further includes: When the first condition is met and a second condition is met, the first electronic device periodically sends a fourth broadcast packet to the second electronic device. The fourth broadcast packet carries a second interval value, and the second interval value indicates an interval for sending the fourth broadcast packet by the first electronic device. The second interval is different from the first interval.

It should be noted that at least one of features carried in the first broadcast packet, the second broadcast packet, the third broadcast packet, and the fourth broadcast packet is different. For example, the feature may be an interval value for sending a broadcast packet, a heartbeat identifier, or a reconnection identifier. The feature is used to distinguish between functions of different broadcast packets in different scenarios.

A plurality of broadcast packets that have a same function in a same scenario, for example, a plurality of second broadcast packets, have at least one same feature on one hand, and therefore have a same function in the scenario of this application. On the other hand, other information carried, for example, timestamps for sending the broadcast packets, may not be completely the same.

In this way, after the first electronic device disconnects the Bluetooth connection to the second electronic device, the first electronic device may adjust an interval that is for sending the broadcast packet and that is to implement device keepalive, to reduce the power consumption of the first electronic device, thereby achieving the objective of energy saving.

With reference to the first aspect, in a possible implementation, the second condition includes any one or more of the following: A battery level of the first electronic device meets a preset condition, load of the first electronic device meets a preset condition, and remaining memory of the first electronic device meets a preset condition.

Optionally, in a case in which the second interval value is greater than the first interval value, the second condition includes any one or more of the following: a battery level of the first electronic device is lower than a preset value, load of the first electronic device is higher than a preset value, and remaining memory of the first electronic device is lower than a preset value. In this way, the first electronic device can prolong the interval that is for sending the broadcast packet and that is to implement device keepalive, to reduce the power consumption of the first electronic device, thereby achieving the objective of energy saving.

Optionally, in a case in which the second interval value is less than the first interval value, the second condition includes any one or more of the following: a battery level of the first electronic device is higher than a preset value, load of the first electronic device is lower than a preset value, and remaining memory of the first electronic device is higher than a preset value. In this way, the first electronic device can shorten the interval that is for sending the broadcast packet and that is to implement device keepalive. When the second electronic device needs to actively reconnect to the first electronic device, duration in which the second electronic device waits for the first electronic device to send the broadcast packet can be reduced.

With reference to the first aspect, in a possible implementation, the first condition includes: within a preset time period, the first electronic device does not send usage data to the second electronic device, or the second electronic device does not send a control instruction to the first electronic device.

With reference to the first aspect, in a possible implementation, the second broadcast packet includes a first heartbeat identifier.

With reference to the first aspect, in a possible implementation, the third broadcast packet includes a first field. A value of the first field is a first value, and the first value indicates the first reconnection identifier in the third broadcast packet. The second broadcast packet includes the first field. A value of the first field is a second value, and the second value indicates the first heartbeat identifier in the second broadcast packet. The second value is different from the first value.

In this way, the second electronic device can determine, based on the value of the first field in a broadcast packet, whether the broadcast packet is a "reconnection broadcast packet" or a "heartbeat broadcast packet" that is to implement device keepalive.

According to a second aspect, this application provides a method for implementing low-power-consumption operation of a first electronic device. The method includes: A second electronic device receives a first broadcast packet sent by the first electronic device; the second electronic device establishes a first Bluetooth connection to the first electronic device based on the first broadcast packet; the second electronic device disconnects the first Bluetooth connection to the first electronic device when a first condition is met; after the first Bluetooth connection is disconnected, the second electronic device receives a second broadcast packet periodically sent by the first electronic device, where the second broadcast packet carries a first interval value, and the first interval value indicates an interval for sending the second broadcast packet by the first electronic device; and in response to the second broadcast packet, the second electronic device stops reconnecting to the first electronic device.

The first electronic device may be a Bluetooth device, and the second electronic device may be a smart gateway.

The first Bluetooth connection may be a persistent Bluetooth connection between the first electronic device and the second electronic device.

According to the method provided in the first aspect, the first electronic device actively disconnects the Bluetooth connection to the second electronic device when the first condition is met, to reduce power consumption of the first electronic device, thereby achieving an objective of energy saving. After the Bluetooth connection is disconnected, the first electronic device periodically sends the second broadcast packet to the second electronic device, to notify the second electronic device that the first electronic device is still connectable at this moment. This implements device keepalive. In some cases, the second electronic device does not need to reconnect to the first electronic device.

With reference to the second aspect, in a possible implementation, after that the second electronic device receives a second broadcast packet periodically sent by the first electronic device, the method further includes: The second electronic device obtains a first instruction, where the first instruction indicates the second electronic device to reconnect to a smart device; and in response to the first instruction, the second electronic device establishes a second Bluetooth connection to the first electronic device based on the second broadcast packet that is sent by the first electronic device again and that is received after the first instruction is received.

In this way, after receiving a control instruction of a user, the second electronic device may establish the second Bluetooth connection to the first electronic device based on the second broadcast packet that is sent by the first electronic device to implement keepalive and that is received after the first instruction is received, so that the second electronic device actively reconnects to the first electronic device.

Optionally, after the second electronic device receives a control instruction of a user, the second electronic device may establish the second Bluetooth connection to the first electronic device based on the second broadcast packet that is sent by the first electronic device to implement keepalive and that is received before the first instruction is received, to reduce duration in which the second electronic device waits for the first electronic device to send the second broadcast packet sent again.

With reference to the second aspect, in a possible implementation, after that the second electronic device receives a second broadcast packet periodically sent by the first electronic device, the method further includes: The second electronic device receives a third broadcast packet sent by the first electronic device, where the third broadcast packet carries a first reconnection identifier, and the first reconnection identifier indicates the second electronic device to establish a Bluetooth connection to the first electronic device; and in response to the third broadcast packet, the second electronic device establishes a second Bluetooth connection to the first electronic device.

In this way, the second electronic device can reestablish a Bluetooth connection to the first electronic device by using the third broadcast packet sent by the first electronic device.

With reference to the second aspect, in a possible implementation, after that the second electronic device receives a second broadcast packet periodically sent by the first electronic device, the method further includes: When the first condition is met and a second condition is met, the second electronic device receives a fourth broadcast packet periodically sent by the first electronic device. The fourth broadcast packet carries a second interval value, and the second interval value indicates an interval for sending the fourth broadcast packet by the first electronic device. The second interval is different from the first interval.

It should be noted that at least one of features carried in the first broadcast packet, the second broadcast packet, the third broadcast packet, and the fourth broadcast packet is different. For example, the feature may be an interval value for sending a broadcast packet, a heartbeat identifier, or a reconnection identifier. The feature is used to distinguish between functions of different broadcast packets in different scenarios.

A plurality of broadcast packets that have a same function in a same scenario, for example, a plurality of second broadcast packets, have at least one same feature on one hand, and therefore have a same function in the scenario of this application. On the other hand, other information carried, for example, timestamps for sending the broadcast packets, may not be completely the same.

In this way, after the first electronic device disconnects the Bluetooth connection to the second electronic device, the first electronic device may adjust an interval that is for sending the broadcast packet and that is to implement device keepalive, to reduce the power consumption of the first electronic device, thereby achieving the objective of energy saving.

With reference to the second aspect, in a possible implementation, the second condition includes any one or more of the following: A battery level of the first electronic device meets a preset condition, load of the first electronic device meets a preset condition, and remaining memory of the first electronic device meets a preset condition.

Optionally, in a case in which the second interval value is greater than the first interval value, the second condition includes any one or more of the following: a battery level of the first electronic device is lower than a preset value, load of the first electronic device is higher than a preset value, and remaining memory of the first electronic device is lower than a preset value. In this way, the first electronic device can prolong the interval that is for sending the broadcast packet and that is to implement device keepalive, to reduce the power consumption of the first electronic device, thereby achieving the objective of energy saving.

Optionally, in a case in which the second interval value is less than the first interval value, the second condition includes any one or more of the following: a battery level of the first electronic device is higher than a preset value, load of the first electronic device is lower than a preset value, and remaining memory of the first electronic device is higher than a preset value. In this way, the first electronic device can shorten the interval that is for sending the broadcast packet and that is to implement device keepalive. When the second electronic device needs to actively reconnect to the first electronic device, duration in which the second electronic device waits for the first electronic device to send the broadcast packet can be reduced.

With reference to the second aspect, in a possible implementation, the first condition includes: within a preset time period, the first electronic device does not send usage data to the second electronic device, or the second electronic device does not send a control instruction to the first electronic device.

With reference to the second aspect, in a possible implementation, the second broadcast packet includes a first heartbeat identifier.

With reference to the second aspect, in a possible implementation, the third broadcast packet includes a first field. A value of the first field is a first value, and the first value indicates the first reconnection identifier in the third broadcast packet.

The second broadcast packet includes the first field. A value of the first field is a second value, and the second value indicates the first heartbeat identifier in the second broadcast packet. The second value is different from the first value.

In this way, the second electronic device can determine, based on the value of the first field in a broadcast packet, whether the broadcast packet is a "reconnection broadcast packet" or a "heartbeat broadcast packet" that is to implement device keepalive.

According to a third aspect, this application provides a system for implementing low-power-consumption operation of a first electronic device. The system includes the first electronic device and a second electronic device. The first electronic device is configured to send a first broadcast packet to the second electronic device. The second electronic device is configured to: after receiving the first broadcast packet, establish a first Bluetooth connection to the first electronic device based on the first broadcast packet. The first electronic device is further configured to disconnect the first Bluetooth connection when a first condition is met. The first electronic device is further configured to: after the first Bluetooth connection is disconnected, periodically send a second broadcast packet to the second electronic device. The second broadcast packet carries a first interval value, and the first interval value indicates an interval for sending the second broadcast packet by the first electronic device. The second electronic device is further configured to: in response to the second broadcast packet, stop reconnecting to the first electronic device.

The first electronic device may be a Bluetooth device, and the second electronic device may be a smart gateway.

The first Bluetooth connection may be a persistent Bluetooth connection between the first electronic device and the second electronic device.

According to the method provided in the first aspect, the first electronic device actively disconnects the Bluetooth connection to the second electronic device when the first condition is met, to reduce power consumption of the first electronic device, thereby achieving an objective of energy saving. After the Bluetooth connection is disconnected, the first electronic device periodically sends the second broadcast packet to the second electronic device, to notify the second electronic device that the first electronic device is still connectable at this moment. This implements device keepalive. The second electronic device does not need to reconnect to the first electronic device.

With reference to the third aspect, in a possible implementation, the second electronic device is further configured to: after receiving the second broadcast packet sent by the first electronic device, obtain a first instruction. The first instruction indicates the second electronic device to reconnect to a smart device. The second electronic device is further configured to establish a second Bluetooth connection to the first electronic device based on the second broadcast packet that is sent by the first electronic device again and that is received after the first instruction is received.

In this way, after receiving a control instruction of a user, the second electronic device may establish the second Bluetooth connection to the first electronic device based on the second broadcast packet that is sent by the first electronic device to implement keepalive and that is received after the first instruction is received, so that the second electronic device actively reconnects to the first electronic device.

Optionally, after the second electronic device receives a control instruction of a user, the second electronic device may establish the second Bluetooth connection to the first electronic device based on the second broadcast packet that is sent by the first electronic device to implement keepalive and that is received before the first instruction is received, to reduce duration in which the second electronic device waits for the first electronic device to send the second broadcast packet sent again.

With reference to the third aspect, in a possible implementation, the first electronic device is further configured to: after sending the second broadcast packet to the second electronic device, send a third broadcast packet to the second electronic device. The third broadcast packet carries a first reconnection identifier, and the first reconnection identifier indicates the second electronic device to establish a Bluetooth connection to the first electronic device. The second electronic device is further configured to: in response to the third broadcast packet, establish a second Bluetooth connection to the first electronic device.

In this way, the first electronic device may actively send the third broadcast packet to the second electronic device, to request to reconnect to the second electronic device.

With reference to the third aspect, in a possible implementation, the first electronic device is further configured to: after establishing the second Bluetooth connection to the second electronic device, stop sending the second broadcast packet.

In this way, the first electronic device sends the second broadcast packet to the second electronic device only after the first electronic device disconnects the Bluetooth connection to the second electronic device, to implement device keepalive.

With reference to the third aspect, in a possible implementation, the first electronic device is further configured to: When the first condition is met and a second condition is met, the first electronic device periodically sends a fourth broadcast packet to the second electronic device. The fourth broadcast packet carries a second interval value, and the second interval value indicates an interval for sending the fourth broadcast packet by the first electronic device. The second interval is different from the first interval.

It should be noted that at least one of features carried in the first broadcast packet, the second broadcast packet, the third broadcast packet, and the fourth broadcast packet is different. For example, the feature may be an interval value for sending a broadcast packet, a heartbeat identifier, or a reconnection identifier. The feature is used to distinguish between functions of different broadcast packets in different scenarios.

A plurality of broadcast packets that have a same function in a same scenario, for example, a plurality of second broadcast packets, have at least one same feature on one hand, and therefore have a same function in the scenario of this application. On the other hand, other information carried, for example, timestamps for sending the broadcast packets, may not be completely the same.

In this way, after the first electronic device disconnects the Bluetooth connection to the second electronic device, the first electronic device may adjust an interval that is for sending the broadcast packet and that is to implement device keepalive, to reduce the power consumption of the first electronic device, thereby achieving the objective of energy saving.

With reference to the third aspect, in a possible implementation, the second condition includes any one or more of the following: A battery level of the first electronic device meets a preset condition, load of the first electronic device meets a preset condition, and remaining memory of the first electronic device meets a preset condition.

Optionally, in a case in which the second interval value is greater than the first interval value, the second condition includes any one or more of the following: a battery level of the first electronic device is lower than a preset value, load of the first electronic device is higher than a preset value, and remaining memory of the first electronic device is lower than a preset value. In this way, the first electronic device can prolong the interval that is for sending the broadcast packet and that is to implement device keepalive, to reduce the power consumption of the first electronic device, thereby achieving the objective of energy saving.

Optionally, in a case in which the second interval value is less than the first interval value, the second condition includes any one or more of the following: a battery level of the first electronic device is higher than a preset value, load of the first electronic device is lower than a preset value, and remaining memory of the first electronic device is higher than a preset value. In this way, the first electronic device can shorten the interval that is for sending the broadcast packet and that is to implement device keepalive. When the second electronic device needs to actively reconnect to the first electronic device, duration in which the second electronic device waits for the first electronic device to send the broadcast packet can be reduced.

With reference to the third aspect, in a possible implementation, the first condition includes: within a preset time period, the first electronic device does not send usage data to the second electronic device, or the second electronic device does not send a control instruction to the first electronic device.

With reference to the third aspect, in a possible implementation, the second broadcast packet includes a first heartbeat identifier.

With reference to the third aspect, in a possible implementation, the third broadcast packet includes a first field. A value of the first field is a first value, and the first value indicates the first reconnection identifier in the third broadcast packet.

The second broadcast packet includes the first field. A value of the first field is a second value, and the second value indicates the first heartbeat identifier in the second broadcast packet. The second value is different from the first value.

According to a fourth aspect, this application provides an electronic device. The electronic device is a first electronic device. The first electronic device includes one or more processors and one or more memories. The one or more memories are coupled to the one or more processors. The one or more memories are configured to store computer program code. The computer program code includes computer instructions. The one or more processors invoke the computer instructions, so that the first electronic device is enabled to perform the method for implementing low-power-consumption operation of a Bluetooth device according to any one of the possible implementations of any one of the foregoing aspects.

According to a fifth aspect, this application provides an electronic device. The electronic device is a second electronic device. The second electronic device includes one or more processors and one or more memories. The one or more memories are coupled to the one or more processors. The one or more memories are configured to store computer program code. The computer program code includes computer instructions. The one or more processors invoke the computer instructions, so that the second electronic device is enabled to perform the method for implementing low-power-consumption operation of a Bluetooth device according to any one of the possible implementations of any one of the foregoing aspects.

According to a sixth aspect, this application provides a computer-readable storage medium, including instructions. When the instructions are run on a first electronic device, the first electronic device is enabled to perform the method for implementing low-power-consumption operation of a Bluetooth device according to any one of the possible implementations of any one of the foregoing aspects.

According to a seventh aspect, this application provides a computer-readable storage medium, including instructions. When the instructions are run on a second electronic device, the second electronic device is enabled to perform the method for implementing low-power-consumption operation of a Bluetooth device according to any one of the possible implementations of any one of the foregoing aspects.

According to an eighth aspect, this application provides a computer program product. When the computer program product runs on a first electronic device, the first electronic device is enabled to perform the method for implementing low-power-consumption operation of a Bluetooth device according to any one of the possible implementations of any one of the foregoing aspects.

According to a ninth aspect, this application provides a computer program product. When the computer program product runs on a second electronic device, the second electronic device is enabled to perform the method for implementing low-power-consumption operation of a Bluetooth device according to any one of the possible implementations of any one of the foregoing aspects.

For beneficial effects in the fourth aspect to the ninth aspect, refer to the descriptions of beneficial effects in the first aspect to the third aspect. Details are not described again in this embodiment of this application.

### BRIEF DESCRIPTION OF DRAWINGS

FIG. 1 is a diagram in which a Bluetooth device 100 establishes a Bluetooth connection to a smart gateway 200 according to an embodiment of this application;
FIG. 2 is a diagram in which a smart gateway 200 informs a user that the smart gateway 200 discovers a to-be-connected Bluetooth device 100 according to an embodiment of this application;
FIG. 3 is a diagram in which a mobile phone informs a user that a smart gateway 200 discovers a to-be-connected Bluetooth device 100 according to an embodiment of this application;
FIG. 4 is a diagram of an architecture of a system according to an embodiment of this application;
FIG. 5 is a diagram of a structure of a Bluetooth device 100 according to an embodiment of this application;
FIG. 6 is a diagram of a structure of a smart gateway 200 according to an embodiment of this application;
FIG. 7 is a diagram of a Bluetooth protocol framework according to an embodiment of this application;
FIG. 8A to FIG. 8D are a group of diagrams of displaying one or more Bluetooth devices "connectable" or "unconnectable" in an AI Life application according to an embodiment of this application;
FIG. 8E and FIG. 8F are a group of diagrams of displaying one or more Bluetooth devices "connectable" or "unconnectable" in an application corresponding to a smart gateway 200 according to an embodiment of this application;
FIG. 9A to FIG. 9D are a group of diagrams in which a user controls, in an AI Life application, a smart gateway to send a control instruction to a Bluetooth device according to an embodiment of this application;
FIG. 10A to FIG. 10C are a group of diagrams in which a mobile phone receives a user operation to enable a Bluetooth device 100 to disconnect a persistent Bluetooth connection to a smart speaker according to an embodiment of this application;
FIG. 11A and FIG. 11B are another group of diagrams in which a mobile phone receives a user operation to enable a Bluetooth device 100 to disconnect a persistent Bluetooth connection to a smart speaker according to an embodiment of this application;
FIG. 12A and FIG. 12B are a group of diagrams of prolonging an interval for sending a "heartbeat broadcast packet" by a Bluetooth device 100 in a Bluetooth device management application (for example, an AI Life application) according to an embodiment of this application;
FIG. 13 is a time sequence diagram in which a Bluetooth device 100 actively requests to reconnect to a smart gateway 200 according to an embodiment of this application;
FIG. 14 is a time sequence diagram in which a smart gateway 200 actively reconnects to a Bluetooth device 100 according to an embodiment of this application;
FIG. 15 is a diagram of a structure of a Bluetooth broadcast packet according to an embodiment of this application;
FIG. 16 to FIG. 23 are several groups of diagrams of specific formats of a "heartbeat broadcast packet" and a "reconnection broadcast packet" according to an embodiment of this application; and
FIG. 24 is a flowchart of a method for implementing low-power-consumption operation of a Bluetooth device according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" indicates "or". For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more than two.

In the following descriptions, the terms "first" and "second" are merely intended for a purpose of description, and shall not be interpreted as indicating or implying relative importance or implying a quantity of indicated technical features. Therefore, a feature limited by "first" or "second" may explicitly or implicitly include one or more features. In the descriptions of embodiments of this application, unless otherwise specified, "a plurality of" means two or more than two.

The term "user interface (user interface, UI)" in the following embodiments of this application is a medium interface for interaction and information exchange between an application or an operating system and a user, and implements conversion between an internal form of information and a form acceptable to the user. The user interface is usually in a representation form of graphical user interface (graphical user interface, GUI), and is a user interface that is displayed in a graphical manner and that is related to a computer operation. The user interface may be a visual interface element, for example, a text, an icon, a button, a menu, a tab, a text box, a dialog box, a status bar, a navigation bar, or a widget that is displayed on a display of an electronic device.

The following describes a process of establishing a Bluetooth connection by a Bluetooth device 100 to a smart gateway 200.

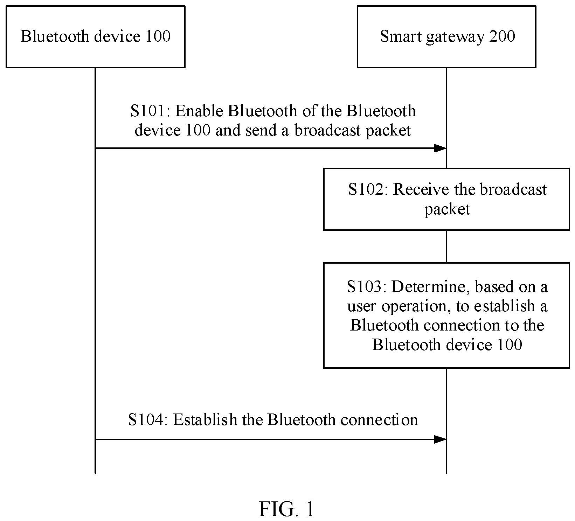

FIG. 1 is an example of a diagram in which the Bluetooth device 100 establishes the Bluetooth connection to the smart gateway 200.

S101: Enable Bluetooth of the Bluetooth device 100 and send a broadcast packet.

In S101, a broadcast packet for requesting to establish a connection may be referred to as a "connection establishment broadcast packet".

Optionally, the Bluetooth device 100 may receive an operation of a user to enable Bluetooth of the Bluetooth device 100. The user operation for triggering Bluetooth enabling of the Bluetooth device 100 may be a trigger operation (for example, pressing) performed on a related button (for example, a Bluetooth switch) of the Bluetooth device 100.

In some embodiments, a button of the Bluetooth switch may be of a press type, a rotary type, or a rocker type. In some other embodiments, an interaction interface used to enable or disable the Bluetooth may be provided on the Bluetooth device 100 to implement enabling or disabling of a Bluetooth function. A specific implementation of the Bluetooth switch is not limited in embodiments of this application.

Optionally, the Bluetooth device 100 may receive an operation of the user to start the Bluetooth device 100. When the Bluetooth device 100 is started, the Bluetooth of the Bluetooth device 100 is also enabled. To be specific, a power-on switch of the Bluetooth device 100 and the Bluetooth switch of the Bluetooth device 100 are a same switch. After the Bluetooth device 100 is started, the Bluetooth of the Bluetooth device 100 is automatically enabled, and no additional operation of the user is required to enable the Bluetooth of the Bluetooth device 100.

During actual application, the Bluetooth of the Bluetooth device 100 may be enabled in a plurality of manners, for example, enabled by using a smart remote control or enabled in a mobile phone application app. The manner of enabling the Bluetooth of the Bluetooth device 100 is not limited in embodiments of this application.

After the Bluetooth of the Bluetooth device 100 is enabled, the Bluetooth device 100 successively sends the "connection establishment broadcast packet". The "connection establishment broadcast packet" may carry information such as a device identifier and a Bluetooth address of the Bluetooth device 100.

Optionally, the Bluetooth device 100 may periodically (for example, every 10s) send the "connection establishment broadcast packet". The "connection establishment broadcast packet" may be used by another device around the Bluetooth device 100 to discover the Bluetooth device 100 that is in a to-be-connected state and establish a Bluetooth connection to the Bluetooth device 100.

S102: The smart gateway 200 receives the "connection establishment broadcast packet" sent by the Bluetooth device 100.

Another device within a communication distance from the Bluetooth device 100 may receive the "connection establishment broadcast packet" sent by the Bluetooth device 100. For example, the smart gateway 200 may receive the "connection establishment broadcast packet" sent by the Bluetooth device 100.

After receiving the "connection establishment broadcast packet" sent by the Bluetooth device 100, the smart gateway 200 parses out the device identifier and the Bluetooth address of the Bluetooth device 100 that are carried in the "connection establishment broadcast packet".

Optionally, after the smart gateway 200 receives the "connection establishment broadcast packet" sent by the Bluetooth device 100, and before the smart gateway 200 determines to establish a Bluetooth connection to the Bluetooth device 100, the smart gateway 200 may inform the user that the to-be-connected Bluetooth device 100 is discovered. A manner of informing the user includes but is not limited to any one of the following manners or a combination of several of the following manners: a vibration prompt, indicator light blinking, a voice prompt, an image prompt on a display, and the like.

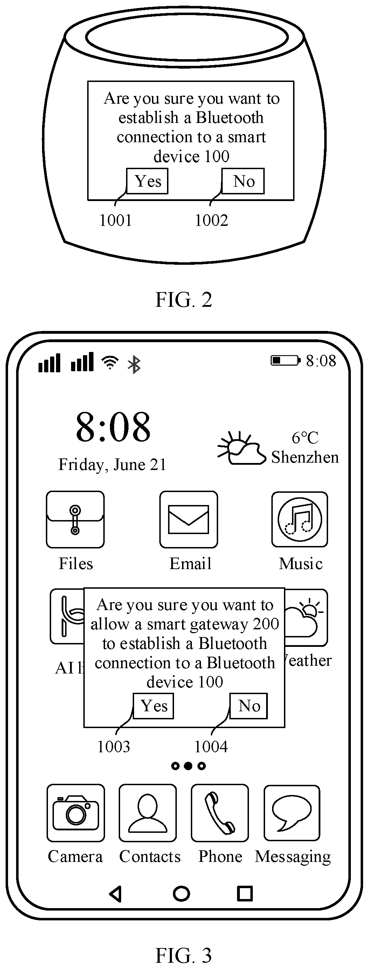

FIG. 2 is an example of a diagram in which the smart gateway 200 informs, by using an image prompt on a display, the user that the smart gateway 200 discovers the to-be-connected Bluetooth device 100.

Prompt information shown in FIG. 2 may be displayed on the display of the smart gateway 200, and prompt content of the prompt information may be "Are you sure you want to establish a Bluetooth connection to a Bluetooth device 100?" The prompt information further includes a control 1001 and a control 1002. The smart gateway 200 may receive a trigger operation (for example, a remote control operation, a button press operation, or a tap operation) performed by the user on the control 1001. In response to the trigger operation of the user, the smart gateway 200 determines to establish a Bluetooth connection to the Bluetooth device 100. The smart gateway 200 may alternatively receive a trigger operation performed by the user on the control 1002. In response to the trigger operation of the user, the smart gateway 200 determines not to establish a Bluetooth connection to the Bluetooth device 100.

Optionally, after the smart gateway 200 receives the "connection establishment broadcast packet" sent by the Bluetooth device 100, the smart gateway 200 may inform, through another device (for example, a mobile phone), the user that the to-be-connected Bluetooth device 100 is discovered. A manner of informing the user includes but is not limited to any one of the following manners or a combination of several of the following manners: a vibration prompt, indicator light blinking, a voice prompt, an image prompt on a display, and the like.

FIG. 3 is an example of a diagram in which a mobile phone informs, by using an image prompt on a display, the user that the smart gateway 200 discovers the to-be-connected Bluetooth device 100.

The mobile phone may display prompt information shown in FIG. 3, and prompt content of the prompt information may be "Are you sure you want to allow a smart gateway 200 to establish a Bluetooth connection to a Bluetooth device 100?" The prompt information further includes a control 1003 and a control 1004. The mobile phone may receive a trigger operation (for example, a tap operation) performed by the user on the control 1003. In response to the trigger operation of the user, the mobile phone determines to allow the smart gateway 200 to establish a Bluetooth connection to the Bluetooth device 100. The mobile phone may alternatively receive a trigger operation performed by the user on the control 1004. In response to the trigger operation of the user, the mobile phone determines not to allow the smart gateway 200 to establish a Bluetooth connection to the Bluetooth device 100.

Optionally, the smart gateway 200 may alternatively inform, in another manner, the user that the smart gateway 200 discovers the to-be-connected Bluetooth device 100. Alternatively, the smart gateway 200 may not inform the user that the smart gateway 200 discovers the to-be-connected Bluetooth device 100, but automatically determine, based on a set strategy, whether to establish a connection to the Bluetooth device 100. This is not limited in this application.

S103: Based on the user operation, the smart gateway 200 determines to establish a Bluetooth connection (a first Bluetooth connection) to the Bluetooth device 100.

In a possible implementation, if the smart gateway 200 may display the prompt information shown in FIG. 2, the smart gateway 200 may receive a trigger operation (for example, a remote control operation, a button press operation, or a tap operation) performed by the user on the control 1001. In response to the trigger operation of the user, the smart gateway 200 determines to establish a Bluetooth connection to the Bluetooth device 100.

In another possible implementation, if the smart gateway 200 does not have a display component, the smart gateway 200 may output prompt information through another device (for example, a mobile phone), for example, output the prompt information shown in FIG. 3. The mobile phone receives a trigger operation (for example, a tap operation) performed by the user on the control 1003. In response to the trigger operation of the user, the mobile phone determines to allow the smart gateway 200 to establish a Bluetooth connection to the Bluetooth device 100.

In another possible implementation, the smart gateway 200 may alternatively receive a trigger operation (for example, pressing) performed by the user on a related button of the smart gateway 200, to determine to establish a Bluetooth connection to the Bluetooth device 100.

In another possible implementation, the smart gateway 200 may alternatively not receive a user operation, but actively establish a Bluetooth connection to the Bluetooth device 100 after receiving the "connection establishment broadcast packet" sent by the Bluetooth device 100.

S104: The smart gateway 200 establishes the Bluetooth connection to the Bluetooth device 100.

After the smart gateway 200 establishes the Bluetooth connection to the Bluetooth device 100, the smart gateway 200 may establish a persistent Bluetooth connection to the Bluetooth device 100. The persistent Bluetooth connection means that the Bluetooth connection is continuously maintained between the Bluetooth device 100 and the smart gateway 200, and the Bluetooth connection is not disconnected within a time period.

Optionally, the persistent Bluetooth connection between the smart gateway 200 and the Bluetooth device 100 may be a generic attribute protocol (generic attribute profile, GATT) connection.

In one aspect, the user may control the Bluetooth device 100 by using the smart gateway 200, for example, control, by using the smart gateway 200, the Bluetooth device 100 to start to work. In another aspect, the Bluetooth device 100 may send generated usage data to a server or another device through the smart gateway 200, to implement communication between the Bluetooth device 100 and the server.

In a process in which the Bluetooth device 100 establishes the Bluetooth connection to the smart gateway 200, it may be discovered that, before the Bluetooth device 100 establishes the Bluetooth connection to the smart gateway 200, the Bluetooth device 100 needs to periodically send a request packet. This increases power consumption of the Bluetooth device 100. After the Bluetooth device 100 establishes the Bluetooth connection to the smart gateway 200, the Bluetooth device 100 needs to maintain the persistent Bluetooth connection to the smart gateway 200. This further increases the power consumption of the Bluetooth device 100. As a result, the Bluetooth device 100 runs with heavy load, and electric energy consumption of the Bluetooth device 100 is also increased. This shortens a service life of a power supply of the Bluetooth device 100, and also increases consumption costs of the user.

Based on the foregoing analysis, an embodiment of this application provides a method for implementing low-power-consumption operation of a Bluetooth device. The method includes: A Bluetooth device 100 establishes a persistent Bluetooth connection to a smart gateway 200. Then, it may be determined, based on a specific determining condition, for example, based on one or more of time, a position, a device status, a user behavior, or historical usage data, that the Bluetooth device 100 does not need to interact with the smart gateway 200 currently. In this case, the Bluetooth device 100 may actively disconnect the persistent Bluetooth connection to the smart gateway 200. In this way, a problem that power consumption increases due to the persistent Bluetooth connection between the devices is alleviated. After the Bluetooth device 100 actively disconnects the persistent Bluetooth connection to the smart gateway 200, the Bluetooth device 100 may still periodically send a broadcast packet to the smart gateway 200. In one aspect, the broadcast packet may notify the smart gateway 200, to implement keepalive of the Bluetooth device 100. In another aspect, the smart gateway 200 may actively establish the persistent Bluetooth connection to the Bluetooth device 100 based on the broadcast packet received from the Bluetooth device 100, to complete data exchange without affecting a normal service function.

Herein, after the Bluetooth device 100 disconnects the persistent Bluetooth connection to the smart gateway 200, the broadcast packet sent by the Bluetooth device 100 to the smart gateway 200 may be a "heartbeat broadcast packet" or a "reconnection broadcast packet". When the Bluetooth device 100 does not need to establish the persistent Bluetooth connection to the smart gateway 200, but needs to implement keepalive, the Bluetooth device 100 may send the "heartbeat broadcast packet" to the smart gateway 200. When the Bluetooth device 100 needs to reestablish the persistent Bluetooth connection to the smart gateway 200, the Bluetooth device 100 may send the "reconnection broadcast packet" to the smart gateway 200.

The "heartbeat broadcast packet" carries a heartbeat identifier, and the heartbeat identifier notifies the smart gateway 200 that the Bluetooth device 100 is still connectable at this time, to implement device keepalive. The "reconnection broadcast packet" carries a reconnection identifier, and the reconnection identifier notifies the smart gateway 200 that the Bluetooth device 100 requests to reestablish the persistent Bluetooth connection to the smart gateway 200.

After the Bluetooth device 100 disconnects the persistent Bluetooth connection to the smart gateway 200, the Bluetooth device 100 sends the "heartbeat broadcast packet" to implement keepalive, and it may be considered that the Bluetooth device 100 is still "connectable". This means that both the Bluetooth device 100 and the smart gateway 200 are powered on, and the smart gateway 200 may receive the "heartbeat broadcast packet" periodically sent by the Bluetooth device 100. In some embodiments, after the Bluetooth device 100 reestablishes the persistent Bluetooth connection to the smart gateway 200, the Bluetooth device 100 stops sending the "heartbeat broadcast packet" to the smart gateway 200. In this case, the Bluetooth device 100 is also "connectable".

In some embodiments, that the Bluetooth device 100 is in an "unconnectable" state means that after the smart gateway 200 disconnects the persistent Bluetooth connection to the Bluetooth device 100, the smart gateway 200 does not receive the "heartbeat broadcast packet" sent by the Bluetooth device 100. The smart gateway 200 may fail to receive the "heartbeat broadcast packet" sent by the Bluetooth device 100 due to the following three cases. Case 1: The Bluetooth device 100 is powered off. In other words, the Bluetooth device 100 does not send the "heartbeat broadcast packet". Case 2: The smart gateway 200 is powered off. In other words, the smart gateway 200 cannot receive the "heartbeat broadcast packet" sent by the Bluetooth device 100. Case 3: Both the Bluetooth device 100 and the smart gateway 200 are powered on, and the Bluetooth device 100 periodically sends the "heartbeat broadcast packet", but a distance between the Bluetooth device 100 and the smart gateway 200 exceeds a preset distance. As a result, the smart gateway 200 cannot receive the "heartbeat broadcast packet" sent by the Bluetooth device 100.

In some embodiments, after the Bluetooth device 100 disconnects the persistent Bluetooth connection to the smart gateway 200, to further reduce power consumption of the Bluetooth device 100, the Bluetooth device 100 may prolong an interval for sending the "heartbeat broadcast packet" by the Bluetooth device 100.

Optionally, the Bluetooth device 100 may prolong, based on a device status of the Bluetooth device 100, the interval for sending the "heartbeat broadcast packet" by the Bluetooth device 100. The device status includes but is not limited to one or more of a battery level, load, and remaining memory.

The Bluetooth device 100 may prolong, based on the battery level, the interval for sending the "heartbeat broadcast packet" by the Bluetooth device 100. For example, when the battery level is lower than a first threshold (for example, 80%) and higher than a second threshold (for example, 50%), the interval for sending the "heartbeat broadcast packet" is set to a first value. When the battery level is lower than the second threshold (for example, 50%) and higher than a third threshold (for example, 30%), the interval for sending the "heartbeat broadcast packet" is set to a second value. The first value is less than the second value. More battery level thresholds may be further set for the Bluetooth device 100 to finely adjust the interval for sending the "heartbeat broadcast packet". This is not limited in embodiments of this application.

In some embodiments, after the Bluetooth device 100 disconnects the persistent Bluetooth connection to the smart gateway 200, if service data of the Bluetooth device 100 is generated and needs to be reported to the smart gateway 200, the Bluetooth device 100 may actively send the "reconnection broadcast packet" to the smart gateway 200, to indicate the smart gateway 200 to reestablish the persistent Bluetooth connection to the Bluetooth device 100, thereby ensuring that data exchange between the Bluetooth device 100 and the smart gateway 200 is completed.

In some embodiments, after the Bluetooth device 100 disconnects the persistent Bluetooth connection to the smart gateway 200, if the smart gateway 200 needs to send a control instruction to the Bluetooth device 100, the smart gateway 200 may actively reestablish the persistent Bluetooth connection to the Bluetooth device 100 based on the "heartbeat broadcast packet" received from the Bluetooth device 100, to ensure that data exchange between the Bluetooth device 100 and the smart gateway 200 is completed.

According to the method for implementing low-power-consumption operation of a Bluetooth device provided in this embodiment of this application, when no data is generated or no device interaction occurs, based on factors such as the time, the position, the user behavior, the device status, and the historical usage data, the Bluetooth device 100 may disconnect the persistent Bluetooth connection or prolong the interval for sending the "heartbeat broadcast packet", to reduce power consumption of the Bluetooth device 100, thereby achieving an objective of energy saving and prolonging a service life of the device.

The following describes an architecture of a system according to an embodiment of this application.

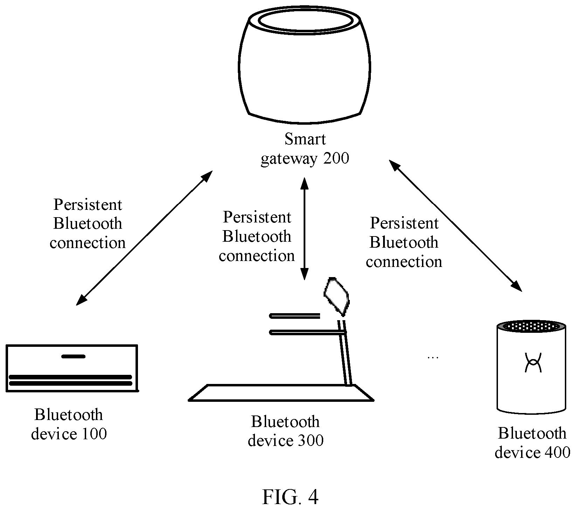

FIG. 4 is a diagram of an example of the architecture of the system according to an embodiment of this application.

As shown in FIG. 4, the system may include a smart gateway 200, a Bluetooth device 100, a Bluetooth device 300, and a Bluetooth device 400. The Bluetooth device 100 is a smart air conditioner. The Bluetooth device 300 is a smart treadmill. The Bluetooth device 400 is a smart air purifier. The smart gateway 200 is a smart speaker. The Bluetooth device 100, the Bluetooth device 300, and the Bluetooth device 400 separately establish persistent Bluetooth connections to the smart gateway 200. It may be understood that the three Bluetooth devices establish persistent Bluetooth connections to the smart gateway 200. Alternatively, more or fewer Bluetooth devices may establish persistent Bluetooth connections to the smart gateway 200. This is not limited in embodiments of this application. In the following embodiments of this application, an example in which the smart gateway 200 establishes a persistent Bluetooth connection to the Bluetooth device 100 is used for description, and how the smart gateway 200 controls the Bluetooth device 100 and forwards data is described.

The smart gateway 200 is not limited to being a smart speaker. The smart gateway may be a device of another type, for example, a liquid crystal display (liquid crystal display, LCD), a gateway device, another Bluetooth device that can discover another surrounding device, or a device that controls another surrounding Bluetooth device or transmits data for another surrounding Bluetooth device. A device type of the smart gateway is not limited in embodiments of this application.

The Bluetooth device 100 is not limited to being a smart air conditioner, and may alternatively be another device. In terms of a device type, the Bluetooth device 100 may alternatively be, for example, any one of the following: a smart treadmill, a smart air purifier, a smart body fat scale, a smart toothbrush, a smart bottle, a smart bottle, a smart lamp, a smart camera, a smart door status sensor, a smart lock, a smart sensor, a smart doorbell, and a smart peephole. In terms of power consumption, that is, based on a battery charging frequency or a battery replacement frequency of a device, the Bluetooth device 100 may be a general-power-consumption device, a low-power-consumption device, or an ultra-low-power-consumption device. For example, the general-power-consumption device may be powered by a lithium battery (for example, a 2000 mA lithium battery), and for example, may be a device like a smart lock, a smart doorbell, or a smart peephole. For example, the general-power-consumption device may be powered by a dry cell. For example, the low-power-consumption device may be a device like a smart body fat scale. The ultra-low-power-consumption device may be, for example, powered by a coin battery, and may be, for example, an ultra-low-power-consumption device like a smart toothbrush, a smart bottle, a smart sensor, or a smart door status sensor.

Optionally, the smart gateway 200 may be connected to a network, receive an operation instruction of a user, and send a control instruction to each Bluetooth device; or send, to a server, data generated by each Bluetooth device that establishes a persistent Bluetooth connection; or forward, to each Bluetooth device that establishes a persistent Bluetooth connection, data sent by a server, to implement interaction between the Bluetooth device and the server. For example, the smart gateway 200 may be connected to a wireless network provided by a router, to implement a networking function. The smart gateway 200 may alternatively implement a networking function in another manner, for example, implement the networking function by using a network adapter, or implement the networking function by connecting to a hotspot of another device. A specific implementation in which the smart gateway 200 implements the networking function is not limited in embodiments of this application.

After the smart gateway 200 establishes the persistent Bluetooth connection to the Bluetooth device 100, in one aspect, the user may control the Bluetooth device 100 by using the smart gateway 200, for example, control, by using the smart gateway 200, the Bluetooth device 100 to start to work. For example, when the user is about to arrive at home, the user may perform an operation on a mobile phone, so that the smart gateway 200 sends a control instruction to the Bluetooth device 100 (for example, a smart air conditioner). The control instruction indicates to start the smart air conditioner. In this way, the user has good indoor experience after arriving at home. Optionally, the control instruction may further indicate to start the smart air conditioner at a specified temperature. Different users may select different start temperatures to improve indoor experience of the different users. In another aspect, the Bluetooth device 100 may send generated usage data to a server or another device through the smart gateway 200, to implement communication between the Bluetooth device 100 and the server. For example, after the user completes exercise, the Bluetooth device 100 (for example, a smart treadmill) records exercise data of the user, and sends the exercise data of the user to the smart gateway 200. The smart gateway 200 sends, to the server, the exercise data of the user that is sent by the smart treadmill. In this way, the server can analyze an exercise status of the user based on the exercise data of the mobile phone user, and urge the user to exercise.

According to the method for implementing low-power-consumption operation of a Bluetooth device provided in this embodiment of this application, the Bluetooth device 100 may determine, based on a specified factor and a rule, for example, based on one or more factors of time, a position, a user behavior, a device status, and historical usage data, that the Bluetooth device 100 does not need to interact with the smart gateway 200 currently. In this case, the Bluetooth device 100 may actively disconnect the persistent Bluetooth connection to the smart gateway 200, to reduce power consumption of the Bluetooth device 100. How the Bluetooth device 100 determines to disconnect the persistent Bluetooth connection to the smart gateway 200 is described in detail subsequently.

Optionally, after the Bluetooth device 100 may actively disconnect the persistent Bluetooth connection to the smart gateway 200, the Bluetooth device 100 may prolong, based on a device status of the Bluetooth device 100, an interval for sending a "heartbeat broadcast packet" by the Bluetooth device 100. The device status includes but is not limited to one or more of a battery level, load, and remaining memory. How the Bluetooth device 100 determines to prolong the interval for sending the "heartbeat broadcast packet" by the Bluetooth device 100 is described in detail subsequently.

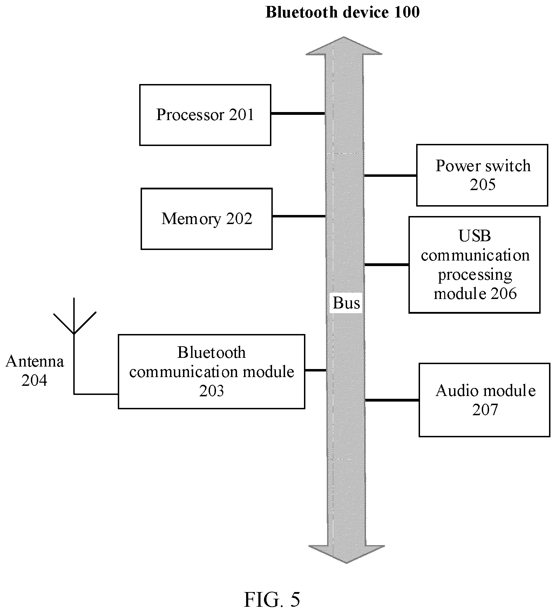

FIG. 5 is a diagram of a structure of a Bluetooth device 100.

The following describes an embodiment in detail by using the Bluetooth device 100 as an example. It should be understood that, the Bluetooth device 100 shown in FIG. 5 is merely an example, and the Bluetooth device 100 may have more or fewer components than those shown in FIG. 5, may combine two or more components, or may have different component configurations. Various components shown in the figure may be implemented by hardware that includes one or more signal processing and/or application-specific integrated circuits, software, or a combination of hardware and software.

As shown in FIG. 5, the Bluetooth device 100 may include: a processor 201, a memory 202, a Bluetooth communication module 203, an antenna 204, a power switch 205, a USB communication module 206, and an audio module 207.

The processor 201 may be configured to read and execute computer-readable instructions. During specific implementation, the processor 201 may mainly include a controller, an arithmetic unit, and a register. The controller is mainly responsible for decoding instructions and sending a control signal for an operation corresponding to the instructions. The arithmetic unit is mainly responsible for saving a quantity of register operations, intermediate operation results, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

In some embodiments, the processor 201 may be configured to parse information received by the Bluetooth communication module 203. The processor 201 may be configured to perform a corresponding processing operation based on a parsing result, for example, generate a pairing mode modification response.

The memory 202 is coupled to the processor 201 and configured to store various software programs and/or a plurality of groups of instructions. During specific implementation, the memory 202 may include a high-speed random-access memory, and may also include a nonvolatile memory, for example, one or more diskette storage devices, a flash device, or another nonvolatile solid-state storage device. The memory 202 may store an operating system, for example, an embedded operating system like uCOS, VxWorks, or RTLinux. The memory 202 may further store a communication program. The communication program may be used to communicate with the smart gateway 200, or more servers, or another device.

The Bluetooth communication module 203 may include a classic Bluetooth (BT) module and/or a Bluetooth low energy (Bluetooth low energy, BLE) module.

In some embodiments, the Bluetooth communication module 203 may monitor a signal transmitted by the smart gateway 200, for example, a probe request or a scanning signal, and may send a response signal, a scanning response, or the like, so that the Bluetooth device 100 can discover the smart gateway 200 and establish a wireless communication connection to the smart gateway 200, to communicate with the smart gateway 200 by using Bluetooth.

In some other embodiments, the Bluetooth communication module 203 may also transmit a signal, for example, broadcast a BLE signal, so that the smart gateway 200 can discover the Bluetooth device 100 and establish a wireless communication connection to the Bluetooth device 100, to communicate with the Bluetooth device 100 by using Bluetooth.

A wireless communication function of the Bluetooth device 100 may be implemented by using the antenna 204, the Bluetooth communication module 203, a modem processor, or the like.

The antenna 204 may be configured to transmit and receive electromagnetic wave signals. Each antenna in the Bluetooth device 100 may be configured to cover a single or a plurality of communication frequency bands.

In some embodiments, the Bluetooth communication module 203 may have one or more antennas.

The power switch 205 may be configured to control a power supply to supply power to the Bluetooth device 100. Optionally, the power supply in the Bluetooth device 100 may be charged not in real time. To be specific, when a battery level of the Bluetooth device 100 is lower than a threshold, the user may charge a battery of the Bluetooth device 100, or replace the battery with a new one. Optionally, the power supply in the Bluetooth device 100 may alternatively be charged in real time. To be specific, a battery of the Bluetooth device 100 is charged in real time through a charging port, to ensure that the Bluetooth device 100 is high on power.

The USB communication module 206 may be configured to communicate with another device through a USB interface (not shown).

The audio module 207 may be configured to output an audio signal through an audio output interface, so that the Bluetooth device 100 can support audio playing. The audio module 207 may be further configured to receive audio data through an audio input interface. The Bluetooth device 100 may be a media playing device, for example, a Bluetooth headset.

In some embodiments, the Bluetooth device 100 may further include a display (not shown), and the display may be configured to display an image, prompt information, or the like. The display may be an LCD, an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light-emitting diode (quantum dot light-emitting diode, QLED) display, or the like.

In some embodiments, the Bluetooth device 100 may further include a serial interface, for example, an RS-232 interface. The serial interface may be connected to another device, for example, an audio playing device like a speaker, so that the Bluetooth device 100 and the audio playing device cooperate in playing of an audio and a video.

It may be understood that the structure shown in FIG. 5 is merely used as an example. In some other embodiments of this application, the Bluetooth device 100 may include more or fewer components than those shown in the figure, or combine some components, or split some components, or have different component arrangements. The components shown in the figure may be implemented by hardware, software, or a combination of software and hardware.

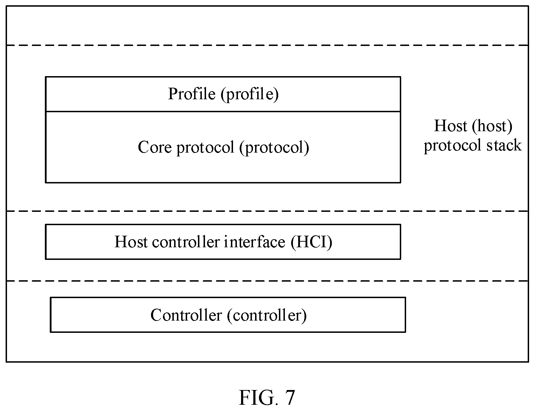

In the method described in this embodiment of this application, for a Bluetooth protocol framework used by the Bluetooth device, refer to the following FIG. 7. Details are not described herein.

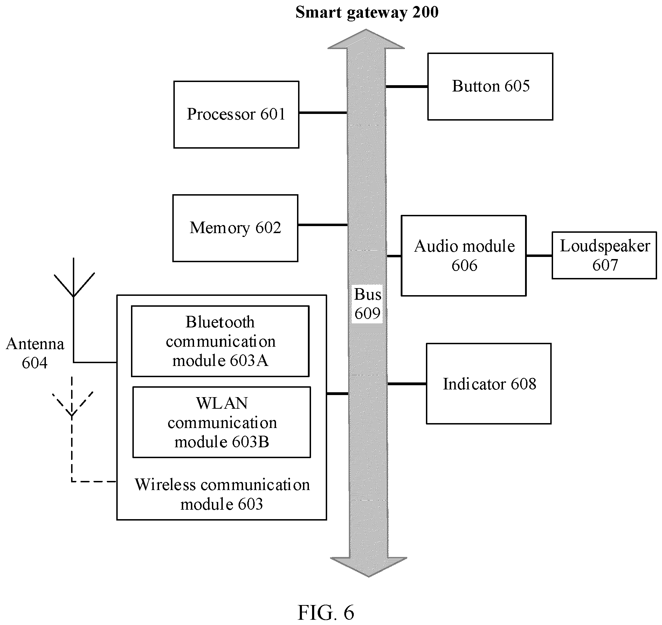

FIG. 6 is an example of a diagram of a structure of a smart gateway 200.

It should be noted that the smart gateway 200 shown in FIG. 6 is merely an example, and the smart gateway 200 may have more or fewer components than those shown in FIG. 6, may combine two or more components, or may have different component configurations. Various components shown in FIG. 6 may be implemented by hardware that includes one or more signal processing and/or application-specific integrated circuits, software, or a combination of hardware and software.

As shown in FIG. 6, the smart gateway 200 may include a processor 601, a memory 602, a wireless communication module 603, a button 605, an antenna 604, an audio module 606, a loudspeaker 607, an indicator 608, and a bus 609. The processor 601, the memory 602, the wireless communication module 603, the button 605, the audio module 606, and the indicator 608 may be connected through the bus 609.

The processor 601 may be configured to read and execute computer-readable instructions. During specific implementation, the processor 601 may mainly include a controller, an arithmetic unit, and a register. The controller is mainly responsible for decoding instructions and sending a control signal for an operation corresponding to the instructions. The arithmetic unit is mainly responsible for saving a quantity of register operations, intermediate operation results, and the like that are temporarily stored during instruction execution. During specific implementation, a hardware architecture of the processor 601 may be an application-specific integrated circuit (ASIC) architecture, an MIPS architecture, an ARM architecture, an NP architecture, or the like.

A memory may further be disposed in the processor 601, and is configured to store instructions and data. In some embodiments, the memory in the processor 601 is a cache. The memory may store instructions or data that has been used or cyclically used by the processor 601. If the processor 601 needs to use the instructions or the data again, the processor may directly invoke the instructions or the data from the memory. This avoids repeated access, and reduces a waiting time of the processor 601, thereby improving system efficiency.

The memory 602 is coupled to the processor 601 and configured to store various software programs and/or a plurality of groups of instructions. The memory 602 may be configured to store computer-executable program code. The executable program code includes instructions. The processor 601 runs the instructions stored in the memory 602, to perform various function applications of the smart gateway 200 and data processing. The memory 602 may include a program storage area and a data storage area. The program storage area may store an operating system, an application required by at least one function (for example, a voice playing function or an image playing function), and the like. The data storage area may store data (for example, an audio frame) created during use of the smart gateway 200, and the like. In addition, the memory 602 may include a high-speed random-access memory, and may further include a non-volatile memory, for example, at least one magnetic disk storage component, a flash memory component, or a universal flash storage (universal flash storage, UFS).

The wireless communication module 603 may provide a wireless communication solution that includes a wireless local area network (wireless local area network, WLAN) (for example, a wireless fidelity (wireless fidelity, Wi-Fi) network), Bluetooth (Bluetooth, BT), and the like and that is applied to the smart gateway 200.

In some embodiments, the wireless communication module 603 may include a Bluetooth (BT) communication module 603A and a WLAN communication module 603B. One or more of the Bluetooth (BT) communication module 603A and the WLAN communication module 603B may monitor a signal transmitted by another device, for example, a probe request or a scanning signal, and may send a response signal, for example, a probe response or a scanning response, so that the another device can discover the smart gateway 200 and establish a wireless communication connection to another device, to communicate with the another device by using one or more wireless communication technologies in Bluetooth or a WLAN. For example, a persistent Bluetooth connection to one or more Bluetooth devices is established by using a Bluetooth technology, to interact with the one or more Bluetooth devices. For another example, a networking function is implemented by using a WLAN technology to communicate with a server. The Bluetooth (BT) communication module 603A may provide a Bluetooth communication solution including one or more of classic Bluetooth and/or Bluetooth low energy. The WLAN communication module 603B may include one or more WLAN communication solutions of Wi-Fi Direct, a Wi-Fi LAN, or Wi-Fi softAP.

The antenna 604 may be configured to transmit and receive electromagnetic wave signals. Antennas of different communication modules may be multiplexed, or may be independent of each other, to improve antenna utilization.

The button 605 may include a power button. The button 605 may be a mechanical button, or may be a touch button. For example, the smart gateway 200 is a smart speaker. The button 605 may further include one or more of a volume button, a previous switch button, a next switch button, a playing/pause button, and the like. The smart gateway 200 may receive a button input, and generate a button signal input related to function control of the smart gateway 200. When the smart gateway 200 plays audio data played and sent by the electronic device, the smart gateway 200 may receive an input of a user on the playing/pause button. In response to the input, the smart gateway 200 may send a pause instruction to the electronic device through a Wi-Fi Direct connection established to the electronic device, to trigger the electronic device to pause playing and sending the audio data to the smart gateway 200.

In some embodiments, the smart gateway 200 may further include a battery, a charging management module, and a power management module. The battery may be configured to supply power to the smart gateway 200. The charging management module is configured to receive a charging input from a charger. The charger may be a wireless charger or a wired charger. In some embodiments of wired charging, the charging management module may receive a charging input from the wired charger through a USB interface. In some embodiments of wireless charging, the charging management module may receive a wireless charging input through a wireless charging coil of the smart gateway 200. When the charging management module charges the battery, the power management module may further supply power to an electronic device. The power management module is configured to connect to the battery, the charging management module, and the processor 601. The power management module receives an input from the battery and/or the charging management module, and supplies power to the processor 601, the memory 602, the wireless communication module 603, and the like. The power management module may be further configured to monitor parameters such as a battery capacity, a battery cycle count, and a battery health status (electric leakage or impedance). In some other embodiments, the power management module may alternatively be disposed in the processor 601. In some other embodiments, the power management module and the charging management module may alternatively be disposed in a same component.

The audio module 606 may be configured to convert digital audio information into an analog audio signal for output, and is also configured to convert analog audio input into a digital audio signal. The audio module 606 may be further configured to encode and decode an audio signal. In some embodiments, the audio module 606 may be disposed in the processor 601, or some functional modules in the audio module 606 are disposed in the processor 601.

The loudspeaker 607 may be connected to the audio module 606, and the loudspeaker 607 may be configured to convert an audio electrical signal into a sound signal.

Optionally, the smart gateway 200 may further include a microphone (not shown in FIG. 6), and the microphone may be configured to convert a sound signal into an electrical signal. When a user controls the smart gateway 200 by using a voice instruction, the user may approach the microphone to make a sound near the microphone, to input a sound signal to the microphone.

The indicator 608 may be an indicator light, and may be configured to indicate a charging status and a power change, or may be configured to indicate a message, a notification, and the like.

In the method described in this embodiment of this application, for a Bluetooth protocol framework used by the smart gateway, refer to the following FIG. 7. Details are not described herein.

FIG. 7 shows a Bluetooth protocol framework according to an embodiment of this application. The Bluetooth protocol framework includes but is not limited to a host (Host) protocol stack, a host controller interface (host controller interface, HCI), and a controller (controller).

The host protocol stack defines a plurality of configuration files (profiles) and core protocols (protocols) in the Bluetooth framework. Each profile defines a corresponding message format and application rule. Specifications corresponding to various possible and universal application scenarios are formulated in a Bluetooth protocol, for example, an advanced audio distribution profile (advanced audio distribution profile, A2DP) and a hands-free profile (hands-free profile, HFP), to implement interconnection and interworking between different devices on different platforms.

The core protocols include but are not limited to a basic Bluetooth service protocol (service discovery protocol, SDP), a logical link control and adaptation protocol (logical link control and adaptation protocol, L2CAP), and the like.

The HCI provides an upper-layer protocol with a unified interface for accessing a link manager and a unified manner of accessing a baseband. Several transport layers exist between a host core protocol stack and the controller. These transport layers are transparent to complete a data transmission task. The Bluetooth special interest group (Bluetooth special Interest Group, SIG) specifies four physical bus manners of connecting to hardware, namely, four HCI transport layers as follows: a universal serial bus (universal serial bus, USB), a recommended standard 232 (recommended standard 232, RS232), a universal asynchronous receiver-transmitter (universal asynchronous receiver-transmitter, UART), and a PC card. The PC card is an abbreviation of a PC memory card international association (personal computer memory card international association, PCMCIA) card.

The controller defines an underlying-layer hardware part, including a radio frequency (radio frequency, RF), a baseband (baseband, BB), and a link manager (Link Manager, LM). An RF layer filters and transmits a data bitstream through microwaves in a 2.4 GHz unlicensed ISM frequency band, and mainly defines conditions that a Bluetooth transceiver needs to meet to work normally in this frequency band. The baseband is responsible for frequency hopping and transmission of Bluetooth data and information frames. The link manager is responsible for connecting to, establishing, and removing links and performing security control. An LM layer is a link management layer protocol of the Bluetooth protocol stack, and is responsible for translating an upper-layer HCI command into an operation acceptable to the baseband, and establishing an asynchronous connection-oriented link (asynchronous connection-oriented link, ACL), a synchronous connection-oriented/extended (synchronous connection-oriented/extended, SCO) link, and a working mode for enabling a Bluetooth device to enter an energy saving mode. A link control (link control, LC) layer is responsible for responding to an upper-layer LM command (for example, executing LM commands for functions such as establishing a transmission link of a data packet and maintaining the link) during transmission of a batch of data packets.

As described in the foregoing content, a status of the Bluetooth device 100 may be classified into a "connectable" state and an "unconnectable" state.

Optionally, the user may check whether one or more Bluetooth devices are "connectable" or "unconnectable" in a Bluetooth device management application, for example, an AI Life application.

Optionally, the user may alternatively check whether one or more Bluetooth devices are "connectable" or "unconnectable" in an application for managing the smart gateway 200.

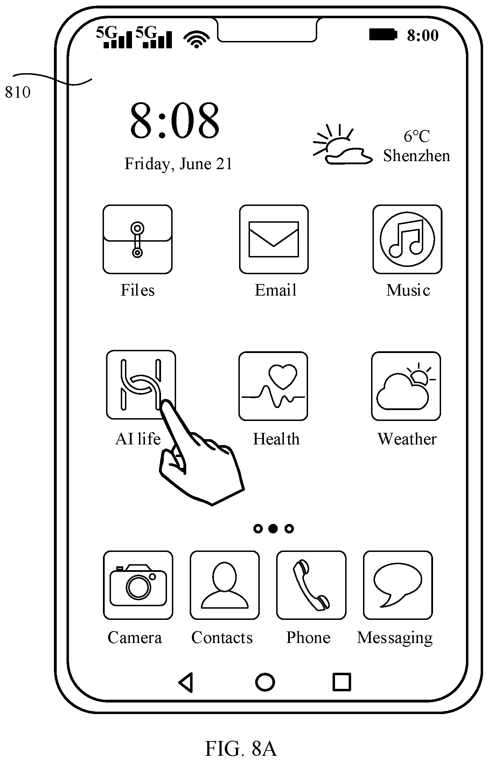

FIG. 8A to FIG. 8D are an example of a group of diagrams of displaying one or more Bluetooth devices "connectable" or "unconnectable" in an AI Life application.

An interface of the AI Life application presented in FIG. 8A to FIG. 8D is merely used for description. A style and content of the application interface presented to a user during use of the application in an actual environment may change.

FIG. 8A shows an example of a user interface 810 on a mobile phone. The user interface 810 may include icons of some applications, such as a Files icon, an Email icon, a Music icon, an AI Life icon, a Health icon, a Weather icon, a Camera icon, a Contacts icon, a Phone icon, and a Messaging icon. In some embodiments, the user interface 810 may include icons of more or fewer applications. In some embodiments, the user interface 810 may include icons of some applications that are different from the applications shown in FIG. 8A. This is not limited herein.

The mobile phone may start the AI Life application in response to a user operation performed on the AI Life icon on the user interface 810.

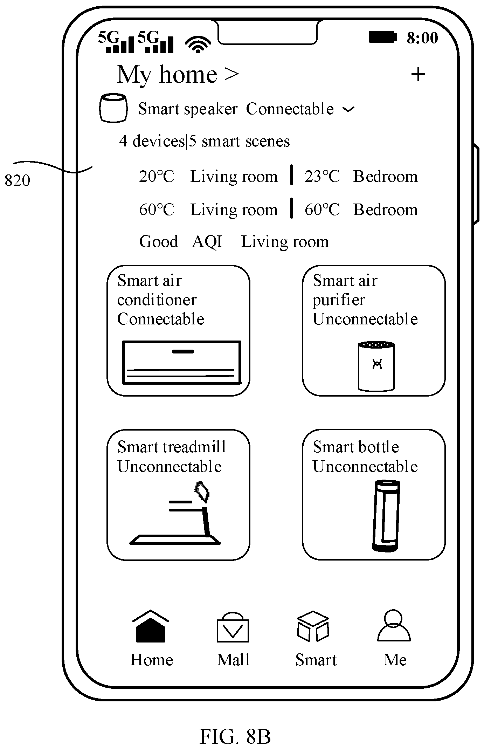

FIG. 8B shows an example of a user interface 820 displayed after the AI Life application is started on the mobile phone. The user interface 820 is a home page provided by the AI Life application.

A smart speaker shown on the user interface 820 is a smart gateway. The user interface 820 further includes one or more Bluetooth devices associated with a same account. There may be a binding relationship between the one or more Bluetooth devices associated with the same account. For example, a smart air conditioner, a smart air purifier, a smart treadmill, and a smart bottle are displayed on the user interface 820. The smart air conditioner is in a "connectable" state. The smart air purifier, the smart treadmill, and the smart bottle are in an "unconnectable" state.

Optionally, the user may further view a connection status of the one or more Bluetooth devices, historical usage data of the one or more Bluetooth devices, and the like in the AI Life application.

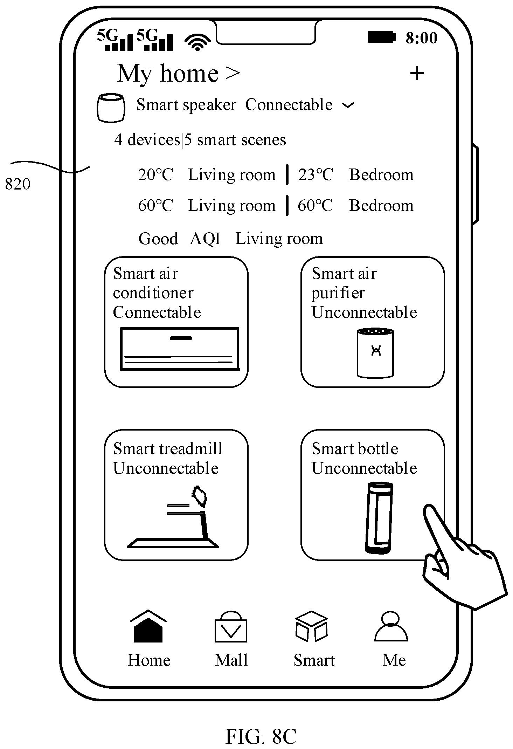

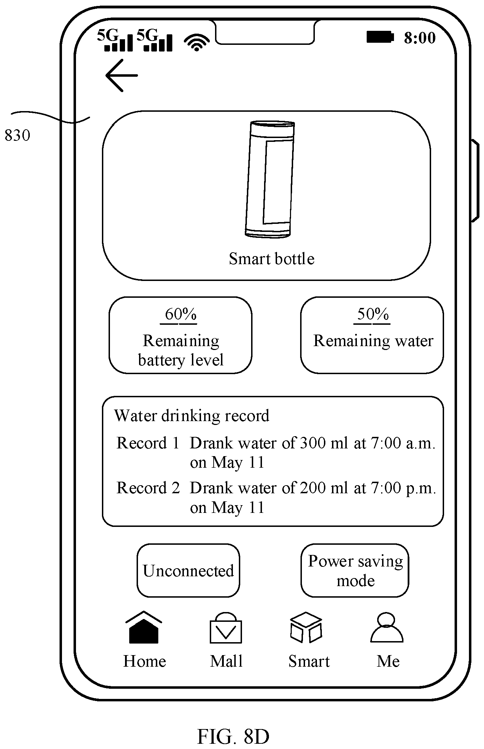

For example, as shown in FIG. 8C, the mobile phone receives an input operation performed by the user on a smart bottle icon on the user interface 820. In response to the input operation of the user, the mobile phone displays a detail page 830 of the smart bottle shown in FIG. 8D.

The detail page 830 includes a plurality of pieces of detailed information about the smart bottle, including but not limited to a remaining battery level 60% of the smart bottle, remaining water 50% in the smart bottle, and a water drinking record of the user. The water drinking record of the user includes a record 1 and a record 2. The water drinking record of the user may further include more other records that are not shown on the detail page 830. The record 1 includes "Drank water of 300 ml at 7:00 a.m. on May 11". The record 2 includes "Drank water of 200 ml at 7:00 p.m. on May 11". The detail page 830 further includes that a status of the smart bottle is "not connected". The detail page 830 further includes a power saving mode option.

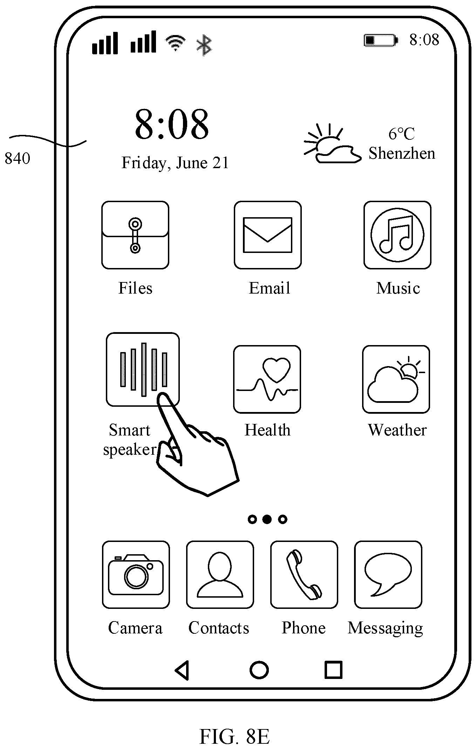

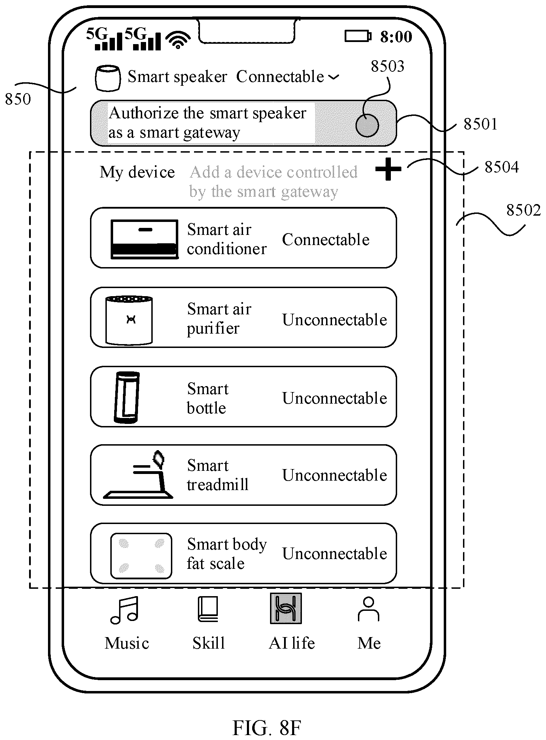

FIG. 8E and FIG. 8F are an example of a group of diagrams of displaying one or more Bluetooth devices "connectable" or "unconnectable" in an application corresponding to a smart gateway 200. An application interface presented in FIG. 8E and FIG. 8F is also merely used for description.

For example, the smart gateway 200 may be a smart speaker, and an application for managing and controlling the smart speaker may be a smart speaker application.

FIG. 8E shows a user interface 840 on another mobile phone. The user interface 840 is similar to the user interface 810. The user interface 840 includes an icon that is of the smart speaker application and that can be operated by a user. For descriptions of the user interface 840, refer to the descriptions of the user interface 810 in the foregoing content. Details are not described again in this embodiment of this application.

As shown in FIG. 8E, the mobile phone receives an input operation performed by the user on the icon of the smart speaker application. In response to the input operation of the user, the mobile phone may display a user interface 850 shown in FIG. 8F.

The user interface 850 may include a smart gateway setting area 8501 and a device adding area 8502.

The mobile phone may receive an input operation (for example, a tap operation) performed by the user on a control 8503 in the smart gateway setting area 8501. In response to the input operation of the user, the mobile phone sets the smart speaker to the smart gateway.

Then, the mobile phone may receive an input operation (for example, a tap operation) performed by the user on the control 8504 in the device adding area 8502, so that the user can add a Bluetooth device that needs to be controlled by the smart speaker.

As shown in FIG. 8E, Bluetooth devices controlled by the smart speaker include but are not limited to a smart air conditioner, a smart air purifier, a smart bottle, a smart treadmill, and a smart body fat scale. The smart air conditioner is in a "connectable" state. The smart air purifier, the smart bottle, the smart treadmill, and the smart body fat scale are in an "unconnectable" state. In this way, the user can check the status of the one or more Bluetooth devices in the smart speaker application.

Optionally, the mobile phone may also receive an input operation performed by the user on an icon of the Bluetooth device on the user interface 850. In response to the input operation of the user, the mobile phone may display a detail page of the Bluetooth device, for example, a status of the Bluetooth device, a remaining battery level of the Bluetooth device, and usage data of the user. Specifically, this is similar to the embodiment shown in FIG. 8D. Details are not described again in this embodiment of this application.

It should be noted that the user may alternatively check whether the Bluetooth device is "connectable" or "unconnectable" in another manner. This is not limited in embodiments of this application.

Optionally, the user may perform an operation on the mobile phone to control the Bluetooth device 100 in the "connectable" state to work in a specific working mode. It can be learned from the foregoing content that the Bluetooth device 100 in the "connectable" state includes two cases. Case 1: A persistent Bluetooth connection is established between the Bluetooth device 100 and the smart gateway 200. Case 2: A persistent Bluetooth connection between the Bluetooth device 100 and the smart gateway 200 is disconnected, but the smart gateway 200 can receive a "heartbeat broadcast packet" or a "reconnection broadcast packet" sent by the Bluetooth device 100.

In Case 1, after the user performs an operation on the mobile phone, the smart gateway 200 may send a control instruction to the Bluetooth device 100 through the persistent Bluetooth connection between the smart gateway 200 and the Bluetooth device 100, to control the Bluetooth device 100 to work in the specific working mode.

In Case 2, after the user performs an operation on the mobile phone, the smart gateway 200 first needs to establish the persistent Bluetooth connection to the Bluetooth device 100 after receiving a broadcast packet sent by the Bluetooth device 100, and then the smart gateway 200 sends a control instruction to the Bluetooth device 100 based on the persistent Bluetooth connection between the smart gateway 200 and the Bluetooth device 100, to control the Bluetooth device 100 to work in the specific working mode.

For example, the Bluetooth device 100 may be a smart lock, and the smart lock is in a "connectable" state. When the user is not at home, the user asks a friend to go to his/her home to get something. Then, after the friend arrives at a door of the user, the friend calls the user to tell the user that the friend arrives at the door of the user, and indicates the user to tell the friend a password of the lock or indicates the user to remotely unlock the lock. In this case, the user may perform an operation on the mobile phone, to remotely control the smart gateway 200 to send a control instruction to the smart lock. The control instruction is used to control the smart lock to unlock.

Optionally, the user may control the smart gateway in an AI Life application or an application for managing and controlling the smart gateway, so that the smart gateway sends the control instruction to the Bluetooth device.

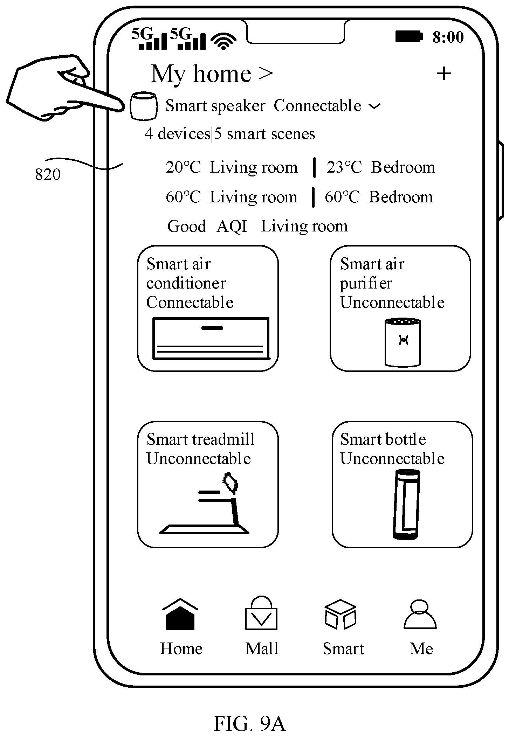

FIG. 9A to FIG. 9D are an example of a group of diagrams in which a user controls, in an AI Life application, a smart gateway to send a control instruction to a Bluetooth device.

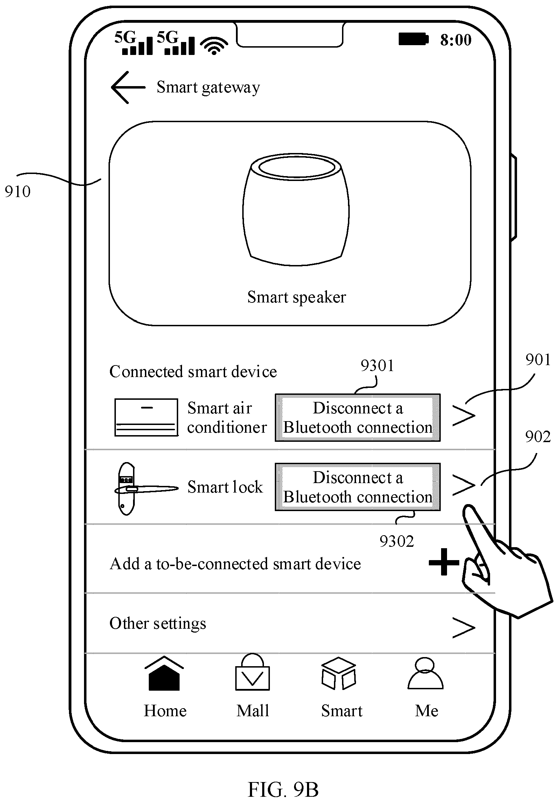

For example, as shown in FIG. 9A, a mobile phone receives an input operation (for example, tapping) performed by the user on an icon of a smart speaker on a user interface 820. In response to the input operation of the user, the mobile phone may display a user interface 910 shown in FIG. 9B.

For example, a control interface of the smart speaker is displayed on the user interface 910. A smart air conditioner and a smart lock that are in a persistent Bluetooth connection to the smart speaker are displayed on the user interface 910. The user interface 910 further includes a control 9301, a control 9302, a control 901, and a control 902. The mobile phone may receive an input operation performed by the user on the control 9301, so that the smart speaker disconnects the persistent Bluetooth connection to the smart air conditioner. The mobile phone may alternatively receive an input operation performed by the user on the control 9302, so that the smart lock disconnects the persistent Bluetooth connection to the smart air conditioner. The mobile phone may alternatively receive an input operation performed by the user on the control 901, so that the mobile phone displays the control interface of the smart speaker for the smart air conditioner. Alternatively, the mobile phone may receive an input operation performed by the user on the control 902, so that the mobile phone displays a control interface (for example, a user interface 920) of the smart speaker for the smart lock. An "Add a to-be-connected smart device" control, an "Other settings" control, and the like are further displayed on the user interface 910. FIG. 9A merely shows an example of a display form of the control interface of the smart speaker, and there may further be another display form in another embodiment. This is not limited in embodiments of this application.

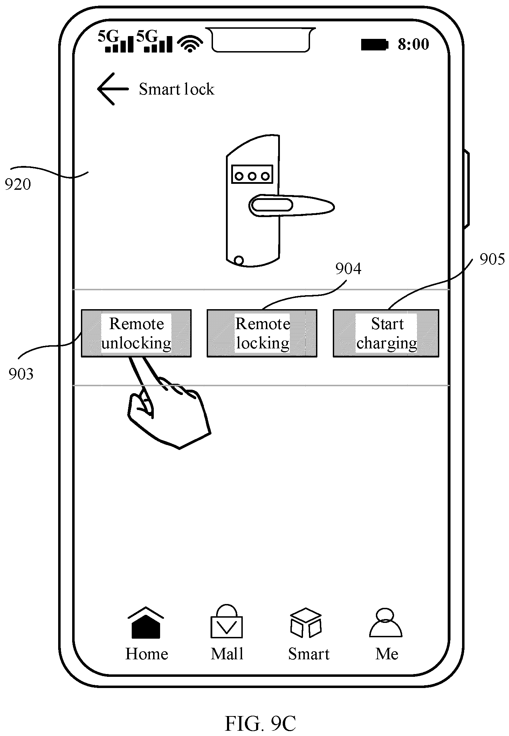

As shown in FIG. 9B, when the user needs to control the smart lock by using the smart speaker, the mobile phone receives the input operation (for example, tapping) performed by the user on the control 902. In response to the input operation of the user, the mobile phone may display the user interface 920 shown in FIG. 9C.

For example, a control interface of the smart lock is displayed on the user interface 920. The user interface 920 may include but is not limited to a control 903 for controlling the smart lock for remote unlocking, a control 904 for controlling the smart lock for remote locking, a control 905 for controlling the smart lock to start being charged, and the like.

As shown in FIG. 9C, the mobile phone may receive an input operation (for example, tapping) performed by the user on the control 903. In response to the input operation of the user, the mobile phone sends an unlocking instruction to a server, and the server sends the unlocking instruction to the smart speaker. When the smart speaker is in a persistent Bluetooth connection to the smart lock, in response to the unlocking instruction, the smart speaker may send the unlocking instruction to the smart lock through the persistent Bluetooth connection to the smart lock, to control unlocking of the smart lock. When the smart speaker is not in a persistent Bluetooth connection to the smart lock, the smart speaker first needs to establish a persistent Bluetooth connection to the smart lock after receiving a "heartbeat broadcast packet" sent by the smart lock, and then the smart speaker sends the unlocking instruction to the smart lock based on the persistent Bluetooth connection to the smart lock, to control unlocking of the smart lock.

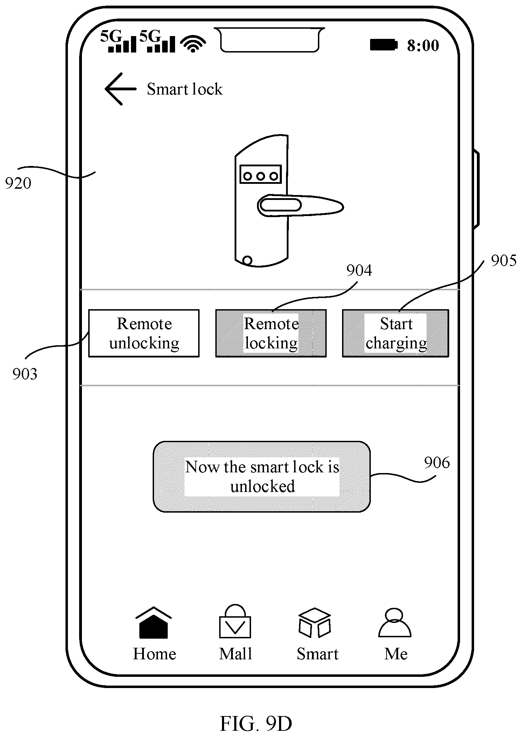

Optionally, after the smart lock completes unlocking, the smart lock may send an unlocking success instruction to the smart speaker. After receiving the unlocking success instruction, the smart speaker sends the unlocking success instruction to the server. The server sends the unlocking success instruction to the mobile phone. After the mobile phone receives the unlocking success instruction, the mobile phone may display prompt information 906 shown in FIG. 9D. Prompt content in the prompt information 906 includes "Now the smart lock is unlocked". The prompt information 906 is used to inform the user that the smart lock is unlocked. This improves user experience.

Optionally, a display form of the control 903 on the user interface 920 obtained after unlocking of the smart lock succeeds may be different from a display form of the control 903 obtained before unlocking of the smart lock succeeds. For example, before unlocking of the smart lock succeeds, the display form of the control 903 is black filling. After unlocking of the smart lock succeeds, the display form of the control 903 is colorless filling, to inform the user that a task of remotely unlocking the smart lock is implemented by the smart speaker.

It should be noted that the user may alternatively remotely control the Bluetooth device by using the smart gateway in another manner, for example, remotely control the Bluetooth device based on an operation of the user in a corresponding application for managing and controlling the smart gateway. A specific implementation is similar to that in the embodiments shown in FIG. 9C and FIG. 9D. Details are not described again in this embodiment of this application.

In another embodiment, after the Bluetooth device 100 establishes the persistent Bluetooth connection to the smart gateway 200, when detecting that usage data of the user is generated, the Bluetooth device 100 may actively send the usage data of the user to the smart gateway 200. The smart gateway 200 sends the usage data of the user collected by the Bluetooth device 100 to the server. In this way, when obtaining authorization from the user, the server may collect statistics on the usage data of the user, to generate a monitoring report on a behavior of using the Bluetooth device by the user. For example, after the user finishes drinking water, the Bluetooth device 100 (for example, a smart bottle) records a volume of water drank by the user and a moment at which the user drinks water, and sends the volume of water drank by the user and the moment at which the user drinks water to the smart gateway 200. The smart gateway 200 sends, to the server, the volume of water drank by the user and the moment at which the user drinks water that are sent by the smart bottle. In this way, the server can analyze a water drinking status of the user based on water drinking data of the user, and urge the user to drink water.

According to the method for implementing low-power-consumption operation of a Bluetooth device provided in this embodiment of this application, when the Bluetooth device 100 does not need to interact with the smart gateway 200 currently, the Bluetooth device 100 may disconnect the persistent Bluetooth connection to the smart gateway 200, to reduce power consumption of the Bluetooth device 100.

The Bluetooth device 100 may disconnect the persistent Bluetooth connection to the smart gateway 200 according to any one of the following methods.

In other words, when a first condition is met, the Bluetooth device 100 may disconnect the first Bluetooth connection to the smart gateway 200. The first condition may include but is not limited to any one or more of the following Manner 1 to Manner 3.

Manner 1: The Bluetooth device 100 may determine, based on a specific determining condition, for example, one or more of time, a position, a user behavior, a device status, and historical usage data, that the Bluetooth device 100 does not need to interact with the smart gateway 200 currently. In this case, the Bluetooth device 100 may actively disconnect the persistent Bluetooth connection to the smart gateway 200, to reduce the power consumption of the Bluetooth device 100.

It should be noted that, for different types of Bluetooth devices, conditions for disconnecting the persistent Bluetooth connection to the smart gateway 200 may be different. The following embodiment of this application merely describes an example of a condition for disconnecting the persistent Bluetooth connection to the smart gateway 200 by the Bluetooth device.

The Bluetooth device 100 may actively disconnect the persistent Bluetooth connection to the smart gateway 200 according to any one or more of the following methods, to reduce the power consumption of the Bluetooth device 100, thereby achieving an objective of saving energy and prolonging a service life of the Bluetooth device 100.

Method 1: Optionally, the Bluetooth device 100 may determine, through analysis based on the historical usage data of the user, that the user does not use the Bluetooth device 100 within a specific time period. In this case, the Bluetooth device 100 may actively disconnect the persistent Bluetooth connection to the smart gateway 200.

Specifically, the Bluetooth device 100 may collect historical usage data of the user within a past time period (for example, within a month), and determine, based on the historical usage data, that the user uses the Bluetooth device 100 only within one or more time periods. For example, if the Bluetooth device 100 is used within a first time period and a second time period, the Bluetooth device 100 may actively disconnect the persistent Bluetooth connection to the smart gateway 200 within a non-first time period and a non-second time period.

For example, the Bluetooth device 100 may be a smart toothbrush. The smart toothbrush collects usage data of the user in a past month and learns that the user usually uses the smart toothbrush from 6:00 a.m. to 8:00 a.m. and from 7:00 p.m. to 10:00 p.m. every day. In the rest of the day, the user seldom uses the smart toothbrush. In this case, the smart toothbrush may actively disconnect a persistent Bluetooth connection to the smart gateway 200 within a period other than 6:00 a.m. to 8:00 a.m. and other than 7:00 p.m. to 10:00 p.m. of the day, to reduce an increase in power consumption caused by the persistent Bluetooth connection continuously maintained between the smart toothbrush and the smart gateway 200.

Method 2: The Bluetooth device 100 may determine, based on a current moment and a position at which the user is located, that the user is not at home. In this case, the Bluetooth device 100 determines that the user does not use the device within a time period in which the user is not at home, and the Bluetooth device 100 may actively disconnect the persistent connection to the Bluetooth device 100.

For example, the Bluetooth device 100 may be a smart air conditioner. The smart air conditioner determines, based on a current moment and a position at which the user is located, that the user is not at home. In this case, the smart air conditioner determines that the user does not turn on the air conditioner before being off work, and the smart air conditioner may actively disconnect a connection to the Bluetooth device 100.

Method 3: The Bluetooth device 100 determines that the user is having a rest, for example, taking a lunch break or sleeping at night. In this case, the Bluetooth device 100 determines that the user does not use the device within a specific period, and the Bluetooth device 100 may actively disconnect the persistent Bluetooth connection to the Bluetooth device 100.

For example, the Bluetooth device 100 may be a smart watch. The smart watch worn by the user may determine, by detecting information such as a heart rate and a wrist movement frequency, whether the user is sleeping. The smart watch uploads monitored sleep data (for example, sleep duration and sleep degree) of the user to the smart gateway 200. The smart gateway 200 may notify the Bluetooth device 100 of a sleep event of the user. After determining that the user is sleeping, the Bluetooth device 100 determines, based on a current moment, whether the user is taking a lunch break or sleeping at night, and determines, based on a current position, that the user is at home. In this case, the Bluetooth device 100 may determine that the user does not use the device within a specific period, and the Bluetooth device 100 may actively disconnect the persistent Bluetooth connection to the Bluetooth device 100.

For example, the Bluetooth device 100 may be a smart bottle. After the smart bottle receives a user sleep event sent by the smart gateway 200, a current moment is 10:00 p.m., and the user is at home. In this case, the smart bottle may determine that the user does not drink water before the user wakes up, for example, before 6:00 a.m, and the smart bottle may actively disconnect a persistent Bluetooth connection to the Bluetooth device 100.

Method 4: The Bluetooth device 100 may determine, through analysis based on a device status, that the Bluetooth device 100 has just been used by the user. In this case, the Bluetooth device 100 may actively disconnect the persistent Bluetooth connection to the smart gateway 200.

For example, the Bluetooth device 100 may be a smart bottle. The user uses the smart bottle to drink water at 8:00 a.m. In addition, the user has not used the smart bottle within a specific period (for example, 5 minutes). In this case, the smart bottle may actively disconnect a persistent Bluetooth connection to the smart gateway 200, to reduce an increase in power consumption caused by the Bluetooth connection continuously maintained between the smart bottle and the smart gateway 200.

Method 5: The Bluetooth device 100 may determine, based on a device status, that the user is using another Bluetooth device, and the Bluetooth device 100 may determine that the user does not use the device within a specific period. In this case, the Bluetooth device 100 may actively disconnect the persistent Bluetooth connection to the Bluetooth device 100.

For example, the Bluetooth device 100 may be a smart robotic vacuum cleaner. If the user is watching a movie on a large screen, and the movie lasts for about 2 hours, the large screen uploads a movie watching event of the user to the smart gateway 200. The smart gateway 200 may notify the smart robotic vacuum cleaner of the movie watching event of the user. After the smart robotic vacuum cleaner determines that the user is watching a movie on the large screen, the smart robotic vacuum cleaner may determine that the user does not use the smart robotic vacuum cleaner before the movie ends (for example, within two hours). In this case, the smart robotic vacuum cleaner may actively disconnect a connection to the Bluetooth device 100.

Manner 2: The user may manually disconnect the persistent Bluetooth connection between the Bluetooth device 100 and the smart gateway 200.

The user may manually disconnect the persistent Bluetooth connection between the Bluetooth device 100 and the smart gateway 200 according to any one of the following methods.

Method 1: The Bluetooth device 100 receives and responds to an operation of the user, so that the Bluetooth device 100 disconnects the persistent Bluetooth connection to the smart gateway 200.

The user operation for triggering the Bluetooth device 100 to disconnect the persistent Bluetooth connection to the smart gateway 200 may be a trigger operation (for example, pressing) performed on a related button (for example, a switch for disconnecting a persistent Bluetooth connection) of the Bluetooth device 100.

In some embodiments, the switch for disconnecting the persistent Bluetooth connection may be of a press type, a rotary type, or a rocker type. A specific implementation of the type of the switch for disconnecting the persistent Bluetooth connection is not limited in embodiments of this application.

Method 2: The user may receive an operation performed by the user in an application, so that the Bluetooth device 100 disconnects the persistent Bluetooth connection to the smart gateway 200.

For example, the mobile phone may receive and respond to an operation performed by the user in a Bluetooth device management application, for example, an AI Life application, so that the Bluetooth device 100 disconnects the persistent Bluetooth connection to the smart gateway 200.

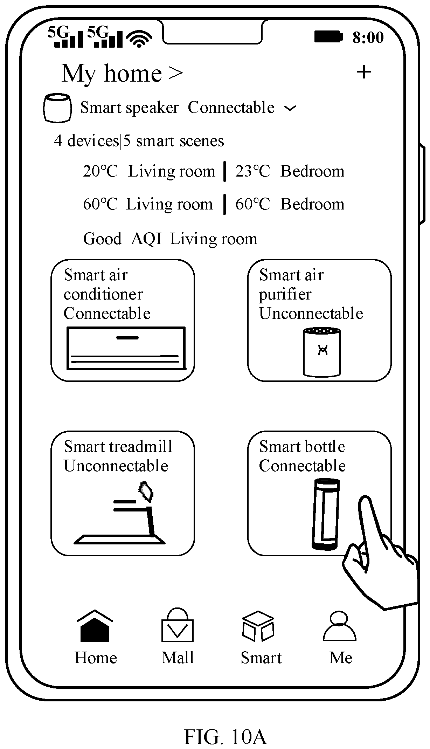

FIG. 10A to FIG. 10C are an example of a group of diagrams in which a mobile phone receives a user operation to enable a Bluetooth device 100 to disconnect a persistent Bluetooth connection to a smart speaker.

For example, the Bluetooth device 100 may be a smart bottle.

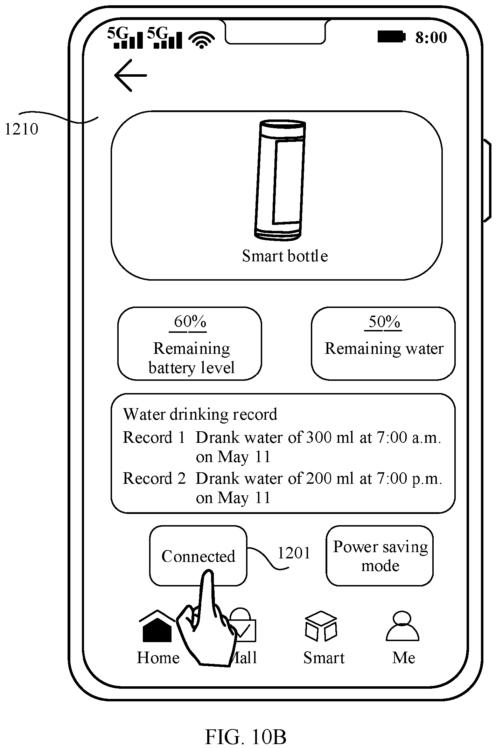

For example, as shown in FIG. 10A, the smart bottle is in a "connectable" state. The mobile phone receives an input operation performed by a user on an icon of the smart bottle. In response to the input operation of the user, the mobile phone displays a user interface 1210 shown in FIG. 10B.

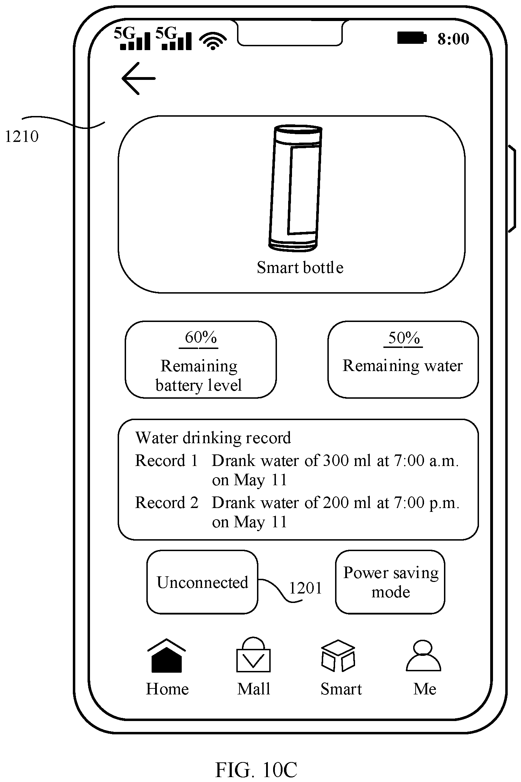

The user interface 1210 is similar to the detail page 830. A difference lies in that a status of the smart bottle on the user interface 1210 is "connected", while a status of the smart bottle on the detail page 830 is "unconnected". "Connected" indicates that a persistent Bluetooth connection is established between the smart bottle and the smart speaker, and "unconnected" indicates that no persistent Bluetooth connection is established between the smart bottle and the smart speaker. For details, refer to the description of the detail page 830 in the embodiment in FIG. 8C. Details are not described again in this embodiment of this application. If the user needs to disconnect the persistent Bluetooth connection between the smart bottle and the smart speaker, the mobile phone may receive an input operation (for example, tapping) performed by the user on a control 1201 on the user interface 1210. In response to the input operation of the user, the smart bottle may actively disconnect the persistent Bluetooth connection to the smart speaker. After the smart bottle actively disconnects the persistent Bluetooth connection to the smart speaker, as shown in FIG. 10C, a display style of the control 1201 changes from "connected" to "unconnected", to notify the user that the smart bottle has disconnected the persistent Bluetooth connection to the smart speaker.

Optionally, after the smart bottle disconnects the persistent Bluetooth connection to the smart speaker, if the smart speaker may receive a "heartbeat broadcast packet" periodically sent by the smart bottle, the smart speaker may further set the smart bottle to the "connectable" state, to implement keepalive of the smart bottle. After the smart bottle disconnects the persistent Bluetooth connection to the smart speaker, if the smart speaker does not receive a "heartbeat broadcast packet" sent by the smart bottle within a specific period, the smart speaker sets the smart bottle to an "unconnectable" state. After the smart bottle is set to the "unconnectable" state by the smart speaker, a status of the smart bottle displayed in FIG. 10A also changes from "connectable" to "unconnectable".

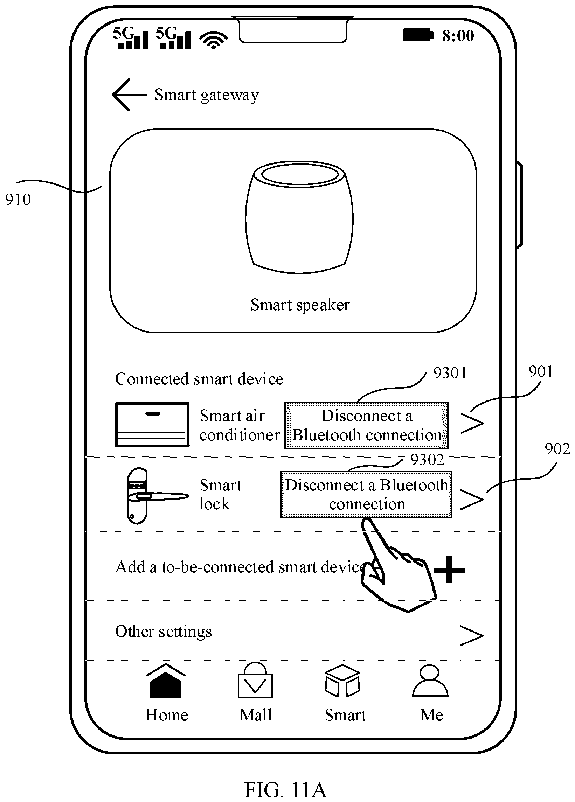

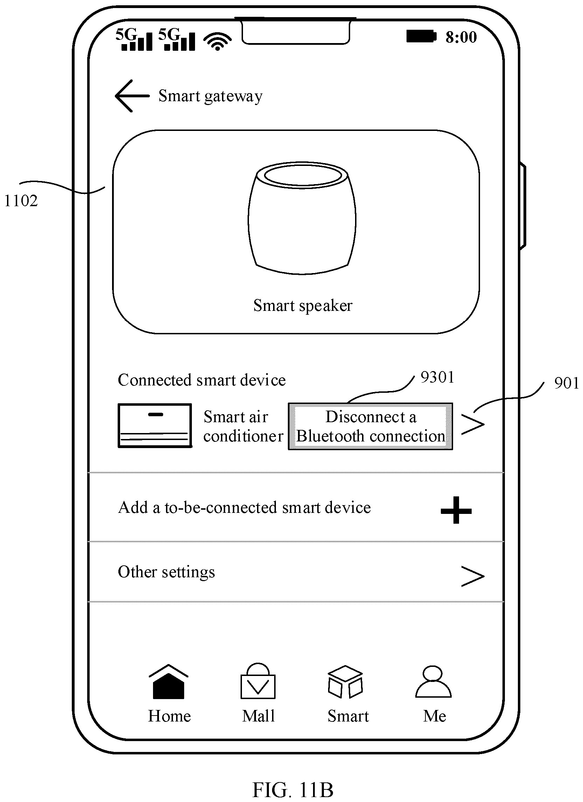

FIG. 11A and FIG. 11B are an example of another group of diagrams in which a mobile phone receives a user operation to enable a Bluetooth device 100 to disconnect a persistent Bluetooth connection to a smart speaker.

For example, the Bluetooth device 100 may be a smart lock.

For example, as shown in FIG. 11A, the mobile phone may receive an input operation (for example, a tap operation) performed by the user on a control 9302. In response to the input operation of the user, the smart speaker actively disconnects the persistent Bluetooth connection to the smart lock. After the smart speaker actively disconnects the persistent Bluetooth connection to the smart lock, the mobile phone may display a user interface 1102 shown in FIG. 11B. The user interface 1102 is similar to the user interface 910, and a difference lies in that, after the smart speaker actively disconnects the persistent Bluetooth connection to the smart lock, one or more devices that are in the persistent Bluetooth connection to the smart speaker and that are displayed on the user interface 1102 do not include the smart lock.

Manner 3: Another device (for example, the smart gateway 200) may determine, based on a specific determining condition, for example, one or more of time, a position, a user behavior, a device status, and historical usage data, that the Bluetooth device 100 does not need to interact with the smart gateway 200 currently. In this case, the smart gateway 200 may send a disconnection instruction to the Bluetooth device 100. After receiving the disconnection instruction, the Bluetooth device 100 disconnects the persistent Bluetooth connection to the smart gateway 200, to reduce the power consumption of the Bluetooth device 100.

A condition for the another device to determine to disconnect the persistent Bluetooth connection between the Bluetooth device 100 and the smart gateway 200 is similar to the condition for the Bluetooth device 100 to determine to disconnect the persistent Bluetooth connection between the Bluetooth device 100 and the smart gateway 200. For details, refer to the descriptions of the plurality of conditions in Manner 1. Details are not described again in this embodiment of this application.

Alternatively, the Bluetooth device 100 may disconnect the persistent Bluetooth connection to the smart gateway 200 in another manner. Manner 1, Manner 2, and Manner 3 are merely examples for description, and do not constitute a limitation.

After the Bluetooth device 100 disconnects the persistent Bluetooth connection to the smart gateway 200, the Bluetooth device 100 still periodically sends a "heartbeat broadcast packet" to the smart gateway 200. In this way, the smart gateway 200 can detect in real time whether the Bluetooth device 100 is "connectable", to implement keepalive of the Bluetooth device 100. Subsequently, if the Bluetooth device 100 needs to reestablish a persistent Bluetooth connection to the smart gateway 200 for data exchange between the Bluetooth device 100 and the smart gateway 200, the smart gateway 200 may actively connect to the Bluetooth device 100 based on the "heartbeat broadcast packet" sent by the Bluetooth device 100, to implement a normal service function. This avoids a case in which the smart gateway 200 cannot connect to the Bluetooth device 100 because the Bluetooth device 100 no longer sends a "heartbeat broadcast packet" after the Bluetooth device 100 disconnects the persistent Bluetooth connection to the smart gateway 200.

It should be noted that, after the Bluetooth device 100 disconnects the persistent Bluetooth connection to the smart gateway 200, the Bluetooth device 100 still successively sends the "heartbeat broadcast packet" to the smart gateway 200. However, after receiving the "heartbeat broadcast packet" sent by the Bluetooth device 100, the smart gateway 200 may not establish a persistent Bluetooth connection to the Bluetooth device 100. The reason is as follows: After the Bluetooth device 100 disconnects the persistent Bluetooth connection to the smart gateway 200, the Bluetooth device 100 sends the "heartbeat broadcast packet" carrying a heartbeat identifier to the smart gateway 200, and the smart gateway 200 identifies the heartbeat identifier carried in the "heartbeat broadcast packet", determines that the Bluetooth device 100 is in a keepalive state, and therefore does not establish a persistent Bluetooth connection to the Bluetooth device 100.

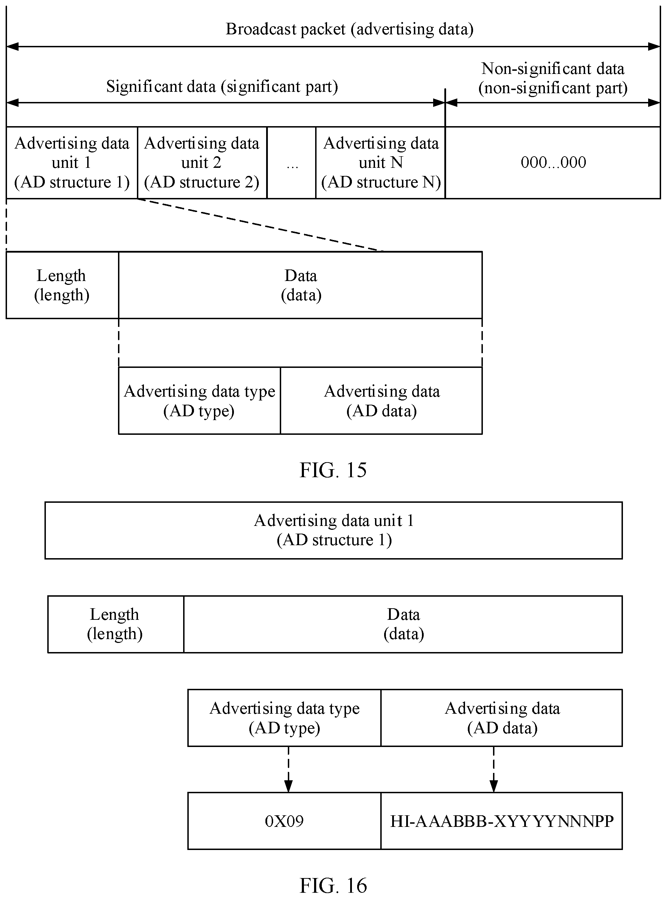

The heartbeat identifier identifies that the broadcast packet is a "heartbeat broadcast packet", and the heartbeat identifier may be a preset field carried in the "heartbeat broadcast packet". Specifically, for descriptions of a format of the "heartbeat broadcast packet" and a type of the heartbeat identifier, refer to the related descriptions of FIG. 16 to FIG. 23.

In some embodiments, after the Bluetooth device 100 disconnects the persistent Bluetooth connection to the smart gateway 200, the Bluetooth device 100 may further prolong an interval for sending the "heartbeat broadcast packet" to the smart gateway 200. In this way, power consumption of successively sending the "heartbeat broadcast packet" by the Bluetooth device 100 can be reduced. After the Bluetooth device 100 prolongs the interval for sending the "heartbeat broadcast packet" to the smart gateway 200, the Bluetooth device 100 needs to notify the smart gateway 200 of the adjusted interval for sending the "heartbeat broadcast packet". This avoids a case in which the smart gateway 200 does not know the adjusted interval for sending the "heartbeat broadcast packet" by the Bluetooth device 100, and consequently the smart gateway 200 fails to receive the "heartbeat broadcast packet" sent by the Bluetooth device 100 within a preset period and sets a status of the Bluetooth device 100 to "unconnectable".

In other words, when the first condition is met and a second condition is met, the Bluetooth device 100 may periodically send a fourth broadcast packet to the smart gateway 200. The fourth broadcast packet carries a second interval value, and the second interval value indicates an interval for sending the fourth broadcast packet by the Bluetooth device 100. The second interval is different from the first interval.

In some embodiments, the Bluetooth device 100 may prolong, based on a device status of the Bluetooth device 100, an interval for sending a broadcast packet by the Bluetooth device 100. The device status includes but is not limited to one or more of a battery level, load, and remaining memory.

To be specific, the second condition includes any one or more of the following: A battery level of the Bluetooth device 100 meets a preset condition, load of the Bluetooth device 100 meets a preset condition, and remaining memory of the Bluetooth device 100 meets a preset condition.

For example, the Bluetooth device 100 may prolong, based on the battery level, the interval for sending the broadcast packet by the Bluetooth device 100. For example, when the Bluetooth device 100 detects that the battery level is lower than a specific threshold (for example, 50%), the Bluetooth device 100 may prolong the interval for sending the broadcast packet.

Optionally, the Bluetooth device 100 may adjust, based on a remaining battery level of the Bluetooth device 100, the interval for sending the "heartbeat broadcast packet" to the smart gateway 200. In other words, the Bluetooth device 100 may adjust, in a gradient manner, a quantity of intervals for sending the "heartbeat broadcast packet". For example, when the battery level is lower than a first threshold (for example, 80%) and greater than a second threshold (for example, 50%), the Bluetooth device 100 may set the interval for sending the "heartbeat broadcast packet" to a first value. When the battery level is lower than a second threshold (for example, 50%) and greater than a third threshold (for example, 30%), the Bluetooth device 100 may set the interval for sending the "heartbeat broadcast packet" to a second value. The first value is less than the second value. The Bluetooth device 100 may further adjust, based on more battery level thresholds, the interval for sending the "heartbeat broadcast packet". This is not limited in embodiments of this application.

In another embodiment, the user may manually prolong the interval for sending the "heartbeat broadcast packet" by the Bluetooth device in a Bluetooth device management application or an application for managing the smart gateway 200.

After the Bluetooth device 100 disconnects the persistent Bluetooth connection to the smart gateway 200, the Bluetooth device 100 periodically sends the "heartbeat broadcast packet" to the smart gateway 200, to notify the smart gateway 200 that the Bluetooth device 100 is in a keepalive state. To reduce the power consumption of the Bluetooth device 100, the mobile phone may receive an operation of the user, to manually prolong the interval for sending the "heartbeat broadcast packet" by the smart bottle.

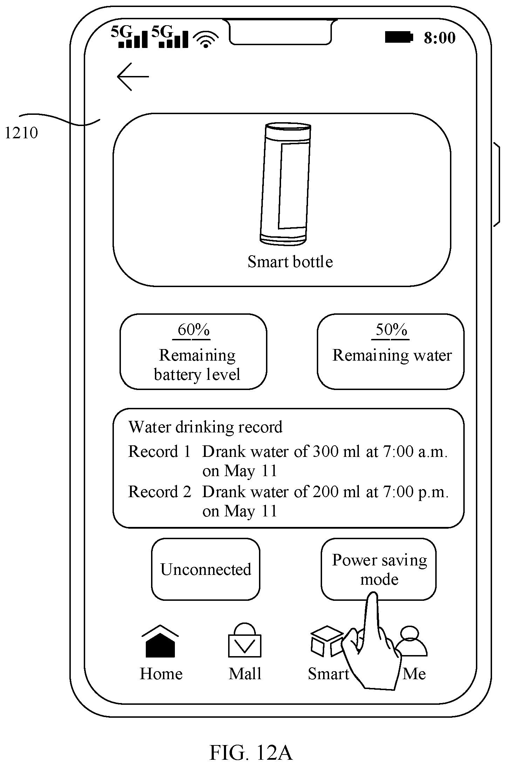

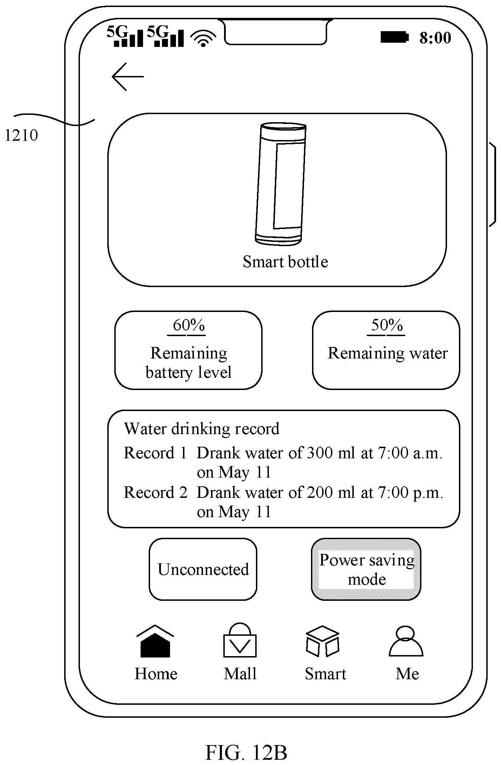

FIG. 12A and FIG. 12B are an example of a group of diagrams of prolonging an interval for sending a "heartbeat broadcast packet" by a Bluetooth device 100 in a Bluetooth device management application (for example, an AI Life application).

As shown in FIG. 12A, after a smart bottle disconnects a persistent Bluetooth connection to a smart speaker, a mobile phone may receive an input operation (for example, tapping) performed by a user on a power saving mode option in FIG. 12A. In response to the input operation of the user, the mobile phone prolongs the interval for sending the "heartbeat broadcast packet" by the smart bottle from a first interval value to a second interval value. The second interval value is greater than the first interval value. In this way, the user can manually prolong the interval for sending the "heartbeat broadcast packet" by the smart bottle, to reduce power consumption of the smart bottle.

Optionally, as shown in FIG. 12B, a display form that is of the power saving mode option and that is obtained after the power saving mode is enabled for the smart bottle may be different from a display form that is of the power saving mode option and that is obtained before the power saving mode is enabled for the smart bottle. For example, before the power saving mode is enabled for the smart bottle, the display form of the power saving mode option is colorless filling. After the power saving mode is enabled for the smart bottle, the display form of the power saving mode option is black filling, to inform the user that the power saving mode is enabled for the smart bottle.

Optionally, if the smart bottle does not disconnect the persistent Bluetooth connection to the smart speaker, after the mobile phone receives the input operation performed by the user on the power saving mode option, the mobile phone may display prompt information, to notify the user that the power saving mode cannot be enabled currently and the power saving mode needs to be enabled after the persistent Bluetooth connection is disconnected.

It should be noted that, after the Bluetooth device 100 actively prolongs the interval for sending the "heartbeat broadcast packet" to a smart gateway 200, the Bluetooth device 100 needs to notify the smart gateway 200 of a new interval. Otherwise, if the smart gateway 200 does not know the new interval for sending the "heartbeat broadcast packet" by the Bluetooth device 100, it is determined, based on the interval for sending the "heartbeat broadcast packet" before adjustment, that the "heartbeat broadcast packet" sent by the Bluetooth device 100 is not received within a preset period, and consequently a status of the Bluetooth device 100 is incorrectly set to an "unconnectable" state.

Optionally, the Bluetooth device 100 may add the interval for sending the "heartbeat broadcast packet" to the "heartbeat broadcast packet" for sending to the smart gateway 200. In other words, the "heartbeat broadcast packet" carries a preset field, and the field identifies the interval for sending the "heartbeat broadcast packet" by the Bluetooth device 100. Values of the field may be different. This indicates that interval values of sending the "heartbeat broadcast packet" by the Bluetooth device 100 are also different. Specifically, refer to the subsequent embodiments shown in FIG. 16 to FIG. 23. Details are not described in this embodiment of this application.

For example, before adjustment, an interval for sending the "heartbeat broadcast packet" by the Bluetooth device 100 is 1s. After adjustment, an interval for sending the "heartbeat broadcast packet" is 1 minute. If the Bluetooth device 100 does not notify the smart gateway 200 of the new interval, the smart gateway 200 still determines, based on the previous interval for sending the "heartbeat broadcast packet" by the Bluetooth device 100, whether the Bluetooth device 100 is kept alive. For example, before adjustment, an interval for sending the "heartbeat broadcast packet" by the Bluetooth device 100 is 1s. If the smart gateway 200 does not receive, within a specific period (for example, 3s), the "heartbeat broadcast packet" sent by the Bluetooth device 100, the smart gateway 200 incorrectly determines that the Bluetooth device 100 is not in the keepalive state, and consequently sets the Bluetooth device 100 to "unconnectable".

Therefore, after the Bluetooth device 100 adjusts the interval for sending the "heartbeat broadcast packet", the Bluetooth device 100 needs to notify the smart gateway 200 of the adjusted interval of the "heartbeat broadcast packet". In this way, the smart gateway 200 can update, in a timely manner on the smart gateway 200, the interval for sending the "heartbeat broadcast packet", to avoid a case in which the smart gateway 200 incorrectly sets the Bluetooth device 100 to the "unconnectable" state.

Optionally, in some embodiments, after the interval for sending the "heartbeat broadcast packet" by the Bluetooth device 100 is prolonged, if the Bluetooth device 100 detects that the device status meets a specific condition, the Bluetooth device 100 may further shorten the interval for sending the "heartbeat broadcast packet". In this way, an interval for the smart gateway 200 to wait for the Bluetooth device 100 to send the "heartbeat broadcast packet" can be reduced, and when the Bluetooth device 100 determines that a service requirement appears or is about to appear, the smart gateway 200 may actively reconnect to the Bluetooth device 100 within a shorter period.

In some embodiments, after detecting that the device status meets a specific condition, the Bluetooth device 100 shortens the interval for sending the "heartbeat broadcast packet". The device status includes but is not limited to one or more of a battery level, load, and remaining memory.

For example, the Bluetooth device 100 may shorten, based on the battery level, the interval for sending the "heartbeat broadcast packet" by the Bluetooth device 100. For example, when the Bluetooth device 100 detects that the battery level is higher than a specific threshold (for example, 50%), the Bluetooth device 100 may shorten the interval for sending the "heartbeat broadcast packet". In some embodiments, a value of the shortened interval for sending the "heartbeat broadcast packet" may be the same as or different from a value of the prolonged interval for sending the "heartbeat broadcast packet". This is not limited in embodiments of this application.

Optionally, the Bluetooth device 100 may adjust, based on a remaining battery level of the Bluetooth device 100, the interval for sending the "heartbeat broadcast packet" to the smart gateway 200. The Bluetooth device 100 may adjust, in a gradient manner, a quantity of intervals for sending the "heartbeat broadcast packet". For example, when the battery level is higher than a third threshold (for example, 30%) and lower than a second threshold (for example, 50%), the Bluetooth device 100 may set the interval for sending the "heartbeat broadcast packet" to a second value. When the battery level is higher than a second threshold (for example, 50%) and lower than a third threshold (for example, 80%), the Bluetooth device 100 may set the interval for sending the "heartbeat broadcast packet" to a first value. The first value is less than the second value. The Bluetooth device 100 may further adjust, based on more battery level thresholds, the interval for sending the "heartbeat broadcast packet". This is not limited in embodiments of this application.

In another embodiment, the user may alternatively manually shorten the interval for sending the "heartbeat broadcast packet" by the Bluetooth device in a Bluetooth device management application or an application for managing the smart gateway 200. For example, the mobile phone may receive an input operation (for example, tapping) performed by the user on the power saving mode option in FIG. 12B. In response to the input operation of the user, the mobile phone shortens the interval for sending the "heartbeat broadcast packet" by the smart bottle from the second interval value to the first interval value. In this way, the user can manually shorten the interval for sending the "heartbeat broadcast packet" by the smart bottle, to reduce power consumption of the smart bottle.

Optionally, after the power saving mode is disabled for the smart bottle, a display form of the power saving mode option is colorless filling, to inform the user that the power saving mode is disabled for the smart bottle.

In some embodiments, after the Bluetooth device 100 disconnects the persistent Bluetooth connection to the smart gateway 200, when the Bluetooth device 100 reports service data, the Bluetooth device 100 may actively request to reconnect to the smart gateway 200. Alternatively, the smart gateway 200 needs to control the Bluetooth device 100. After receiving a control instruction, when the smart gateway 200 receives the "heartbeat broadcast packet" sent by the Bluetooth device 100 again, the smart gateway 200 may actively reconnect to the Bluetooth device 100.

First, a scenario in which the Bluetooth device 100 actively requests to a reconnection to the smart gateway 200 is described.

When the Bluetooth device 100 reports service data to the smart gateway 200, the Bluetooth device 100 may send a "reconnection broadcast packet" (herein, the "reconnection broadcast packet" may be referred to as a third broadcast packet) to the smart gateway 200. The "reconnection broadcast packet" carries a reconnection identifier. After receiving the "reconnection broadcast packet" sent by the Bluetooth device 100, the smart gateway 200 parses out the reconnection identifier carried in the "reconnection broadcast packet". The smart gateway 200 may reestablish a persistent Bluetooth connection to the Bluetooth device 100.

The reconnection identifier identifies that the broadcast packet is a "reconnection broadcast packet", and the reconnection identifier may be a preset field carried in the "heartbeat broadcast packet". Specifically, for descriptions of a format of the "reconnection broadcast packet" and a type of the reconnection identifier in the "reconnection broadcast packet", refer to the related descriptions of FIG. 16 to FIG. 23.

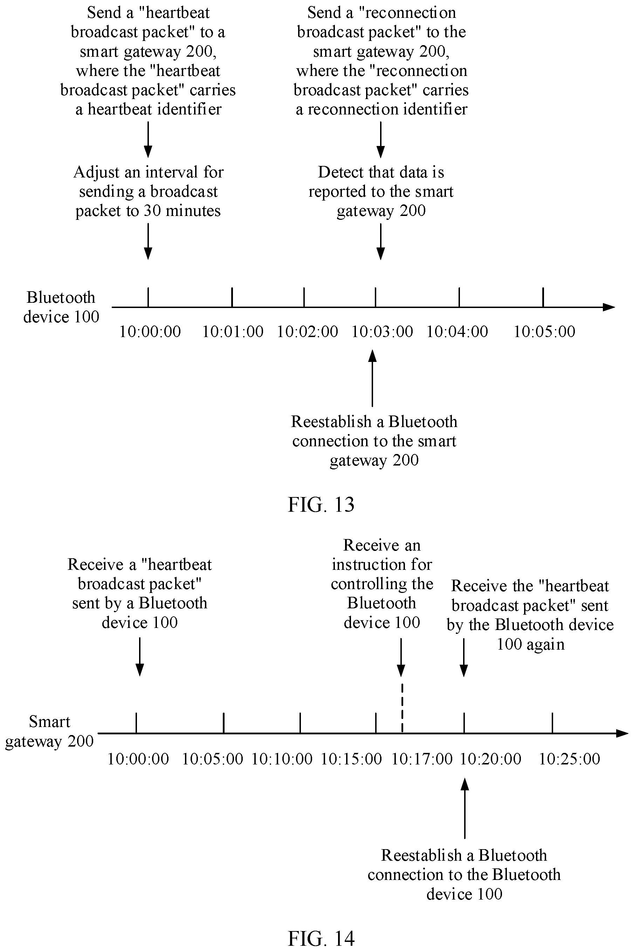

FIG. 13 is an example of a time sequence diagram in which a Bluetooth device 100 actively requests to reconnect to a smart gateway 200.

For example, an interval for sending a broadcast packet by the Bluetooth device 100 to the smart gateway 200 is 30 minutes.

After the Bluetooth device 100 disconnects a persistent Bluetooth connection to the smart gateway 200, the Bluetooth device 100 adjusts the interval for sending the "heartbeat broadcast packet" to 30 minutes. As shown in FIG. 13, at a moment 10:00:00, the Bluetooth device 100 sends a "heartbeat broadcast packet" to the smart gateway 200. The "heartbeat broadcast packet" carries a heartbeat identifier and a quantity of intervals (for example, 30 minutes) for sending the "heartbeat broadcast packet". When receiving the "heartbeat broadcast packet", the smart gateway 200 determines that the Bluetooth device 100 is in a keepalive state, and does not reestablish a persistent Bluetooth connection to the Bluetooth device 100. Because the adjusted interval for sending the "heartbeat broadcast packet" by the Bluetooth device 100 is 30 minutes, the Bluetooth device 100 may send the "heartbeat broadcast packet" to the smart gateway 200 again at a moment 10:30:00.

After a time period, for example, at a moment 10:03:00, when the Bluetooth device 100 determines that data is reported to the smart gateway 200, and the Bluetooth device 100 needs to request to reconnect to the smart gateway 200, the Bluetooth device 100 may send a "reconnection broadcast packet" to the smart gateway 200 at the moment 10:03:00. The "reconnection broadcast packet" carries a reconnection identifier. When receiving the "reconnection broadcast packet" including the reconnection identifier, the smart gateway 200 reestablishes a persistent Bluetooth connection to the Bluetooth device 100. For example, at the moment 10:03:00, the smart gateway 200 reestablishes a persistent Bluetooth connection to the Bluetooth device 100.

After the smart gateway 200 reestablishes the persistent Bluetooth connection to the Bluetooth device 100, the Bluetooth device 100 may stop sending the "heartbeat broadcast packet" to the smart gateway 200.

For example, the Bluetooth device 100 may actively request, according to any one or more of the following methods, a reconnection to the smart gateway 200.

Method 1: The Bluetooth device 100 may determine, through analysis based on historical usage data of a user, that the user may use the Bluetooth device 100 within a specific time period. In this case, the Bluetooth device 100 may actively reconnect to the smart gateway 200.

The Bluetooth device 100 may collect historical usage data of the user within a past time period (for example, within a month), and determine, based on the historical usage data, that the user uses the Bluetooth device 100 only within one or more time periods. For example, if the Bluetooth device 100 is used within a first time period and a second time period, the Bluetooth device 100 may actively request to reconnect to the smart gateway 200 within the first time period and the second time period.

For example, the Bluetooth device 100 may be a smart toothbrush. The smart toothbrush collects usage data of the user in a past month and learns that the user usually uses the smart toothbrush from 6:00 a.m. to 8:00 a.m. and from 7:00 p.m. to 10:00 p.m. every day. In the rest of the day, the user seldom uses the smart toothbrush. In this case, within time periods such as 6:00 a.m. to 8:00 a.m. and 7:00 p.m. to 10:00 p.m., the Bluetooth device 100 may actively request to reconnect to the smart gateway 200. In other words, the Bluetooth device 100 actively establishes a persistent Bluetooth connection to the smart gateway 200. In some embodiments, to enhance user experience, the Bluetooth device 100 may request to reconnect to the smart gateway 200 at a moment before the first time period and the second time period arrive. In this way, within the first time period and the second time period, the Bluetooth device 100 and the smart gateway 200 are in the persistent Bluetooth connection.

Method 2: The Bluetooth device 100 may determine, based on a current moment and a position at which a user is located, that the user is at home. In this case, the Bluetooth device 100 determines that the user may use the device in a time period in which the user is at home, and the Bluetooth device 100 may actively request to reconnect to the smart gateway 200.

For example, the Bluetooth device 100 may be a smart air conditioner. The smart air conditioner determines, based on the current moment and the position at which the user is located, that the user is at home, and the user may turn on the air conditioner. In this case, the smart air conditioner may actively request to reconnect to the smart gateway 200.

Method 3: The Bluetooth device 100 may determine, based on a current moment, a position at which a user is located, and a user behavior, that the user is having a rest, for example, taking a lunch break or sleeping at night. In this case, the Bluetooth device 100 determines that the user may use the device within a specific period, and the Bluetooth device 100 may actively request to reconnect to the smart gateway 200.

For example, the Bluetooth device 100 may be a smart sleep tracker. The smart sleep tracker may determine, by detecting information such as a heart rate and a wrist movement frequency, whether the user is sleeping. If the smart sleep tracker determines that the user is sleeping, the smart sleep tracker determines that the user needs sleep quality tracking before the user wakes up. In this case, the smart sleep tracker may actively request to reconnect to the smart gateway 200. After the smart sleep tracker establishes a persistent Bluetooth connection to the smart gateway 200, the smart sleep tracker may further send tracked sleep data of the user to a server through the smart gateway 200, so that the server can analyze sleep quality of the user.

Method 4: The Bluetooth device 100 may determine, through analysis based on data collected in real time, that the Bluetooth device 100 needs to report data to the smart gateway 200. In this case, the Bluetooth device 100 may request to reconnect to the smart gateway 200.

For example, the Bluetooth device 100 may be a smart bottle. The smart bottle determines, based on data collected in real time, that a user is drinking water. In this case, the smart bottle may actively request to reconnect to the smart gateway 200. After the smart bottle reestablishes a persistent Bluetooth connection to the smart gateway 200, the smart bottle may upload water drinking data (for example, a volume of drank water and a moment at which the user drinks water) of the user to the smart gateway 200. Then, the smart gateway 200 sends the water drinking data of the user to a server, so that the server can summarize the water drinking data of the user, analyze a water drinking habit of the user, provide a suggestion on the water drinking habit of the user, and the like.

It should be noted that methods adopted for different types of Bluetooth devices to determine to establish a persistent Bluetooth connection to the smart gateway 200 may be different. This embodiment of this application merely provides an adaptive description, and a method adopted for the Bluetooth device 100 to reestablish a persistent Bluetooth connection to the smart gateway 200 may alternatively be another setting.

Next, a scenario in which the smart gateway 200 actively reconnects to the Bluetooth device 100 is described.

When the smart gateway 200 actively reconnects to the Bluetooth device 100, an interval for sending a "heartbeat broadcast packet" by the Bluetooth device 100 needs to be considered. Then, when the smart gateway 200 receives the "heartbeat broadcast packet" sent by the Bluetooth device 100, the smart gateway 200 may actively reconnect to the Bluetooth device 100.

Specifically, the Bluetooth device 100 sends the "heartbeat broadcast packet" to the smart gateway 200 after each preset interval. For example, at a moment 1, the smart gateway 200 receives the "heartbeat broadcast packet" sent by the Bluetooth device 100. At a moment 2, the smart gateway 200 receives an instruction, for example, a user instruction or a server instruction, and needs to reestablish a persistent Bluetooth connection to the Bluetooth device 100. The moment 2 is later than the moment 1. In this case, when receiving the "heartbeat broadcast packet" sent by the Bluetooth device 100 next time, the smart gateway 200 may reestablish a persistent Bluetooth connection to the Bluetooth device 100. For example, at a moment 3, the smart gateway 200 receives the "heartbeat broadcast packet" sent by the Bluetooth device 100 again. In this case, the smart gateway 200 may actively establish a persistent Bluetooth connection to the Bluetooth device 100 based on the "heartbeat broadcast packet" received at the moment 3. A time difference between the moment 3 and the moment 2 is an interval or an integer multiple of an interval for sending the "heartbeat broadcast packet" by the Bluetooth device 100.

FIG. 14 is an example of a time sequence diagram in which a smart gateway 200 actively reconnects to a Bluetooth device 100.

For example, an interval for sending a "heartbeat broadcast packet" by the Bluetooth device 100 to the smart gateway 200 is 5 minutes.

After the Bluetooth device 100 disconnects a persistent Bluetooth connection to the smart gateway 200, the Bluetooth device 100 adjusts the interval for sending the "heartbeat broadcast packet" to 5 minutes. For example, as shown in FIG. 14, the smart gateway 200 receives, at a moment 10:00:00, a "heartbeat broadcast packet" sent by the Bluetooth device 100. The "heartbeat broadcast packet" carries a heartbeat identifier. When receiving the "heartbeat broadcast packet", the smart gateway 200 only determines that the Bluetooth device 100 is in a keepalive state, and does not reestablish a persistent Bluetooth connection to the Bluetooth device 100.

It is assumed that, after a time period, for example, at a moment 10:15:00, the smart gateway 200 receives an instruction. The instruction is used to control the Bluetooth device 100 to work in a specific working mode. For example, at a moment 10:17:00, the smart gateway 200 receives an instruction. The instruction is used to control a smart lock to open a door. However, at this moment, the smart lock is not in a persistent Bluetooth connection to the smart gateway 200, and the smart gateway 200 cannot send the control instruction to the smart lock. The smart gateway 200 may send the control instruction to the smart lock only after the persistent Bluetooth connection is reestablished between the smart lock and the smart gateway 200.

In this case, when receiving the "heartbeat broadcast packet" sent by the Bluetooth device 100 next time, the smart gateway 200 actively reestablishes a persistent Bluetooth connection to the Bluetooth device 100.

For example, as shown in FIG. 14, at a moment 10:20:00, the smart gateway 200 receives the "heartbeat broadcast packet" sent by the Bluetooth device 100 again. However, the smart gateway 200 receives an instruction before this moment, and needs to reestablish a persistent Bluetooth connection to the Bluetooth device 100. In this case, the smart gateway 200 may reestablish a persistent Bluetooth connection to the Bluetooth device 100 based on the "heartbeat broadcast packet" received at 10:20:00. After the smart gateway 200 reestablishes a persistent Bluetooth connection to the Bluetooth device 100, the smart gateway 200 sends a control instruction to the Bluetooth device 100, so that the Bluetooth device 100 works in a specific working mode.

For example, after the smart lock reestablishes the persistent Bluetooth connection to the smart gateway 200, the smart gateway 200 may send a control instruction (for example, an unlocking instruction) to the smart lock. After receiving the unlocking instruction, the smart lock is automatically unlocked. This implements remote unlocking.

After the smart gateway 200 reestablishes the persistent Bluetooth connection to the Bluetooth device 100, the Bluetooth device 100 may stop sending the "heartbeat broadcast packet" to the smart gateway 200.

It can be learned from the foregoing description that the Bluetooth device 100 may determine, based on one or more of the time, the position, the user status, the device status, and the historical usage data, that the Bluetooth device 100 does not send usage data to the smart gateway 200, or the smart gateway 200 does not send a control instruction to the Bluetooth device 100. In this case, the Bluetooth device 100 may actively disconnect the persistent Bluetooth connection to the smart gateway 200, to reduce the power consumption of the Bluetooth device 100.

After the Bluetooth device 100 actively disconnects the persistent Bluetooth connection to the smart gateway 200, the Bluetooth device 100 may further send a "heartbeat broadcast packet" to the smart gateway 200, so that the smart gateway 200 may determine that the Bluetooth device 100 is still "connectable", to implement device keepalive. In addition, the "heartbeat broadcast packet" carries a heartbeat identifier, so that the smart gateway 200 does not establish a persistent Bluetooth connection to the Bluetooth device 100 based on the heartbeat identifier. In other words, the heartbeat identifier notifies the smart gateway 200 that the Bluetooth device 100 is kept alive but a persistent Bluetooth connection does not need to be established.

Optionally, after the Bluetooth device 100 actively disconnects the persistent Bluetooth connection to the smart gateway 200, the Bluetooth device 100 may prolong, based on one or more of a battery level, load, or remaining memory, an interval for sending the "heartbeat broadcast packet" to the smart gateway 200, to reduce the power consumption of the Bluetooth device 100. The extended interval may be carried in the "heartbeat broadcast packet" to notify the smart gateway 200.

When the Bluetooth device 100 sends usage data to the smart gateway 200, or the smart gateway 200 needs to send a control instruction to the Bluetooth device 100, the smart gateway 200 may reestablish a persistent Bluetooth connection to the Bluetooth device 100. In a possible implementation, the Bluetooth device 100 may send a "reconnection broadcast packet" to the smart gateway 200. The "reconnection broadcast packet" carries a reconnection identifier. The reconnection identifier indicates the smart gateway 200 to establish a persistent Bluetooth connection to the Bluetooth device 100.

Optionally, the "heartbeat broadcast packet" and the "reconnection broadcast packet" sent by the Bluetooth device 100 to the smart gateway 200 may be Bluetooth broadcast packets sent according to a Bluetooth protocol. The following describes formats of the "heartbeat broadcast packet" and the "reconnection broadcast packet" in the foregoing descriptions.

First, a structure of a broadcast packet in the Bluetooth protocol is briefly described.

For example, FIG. 15 shows a structure of a Bluetooth broadcast packet according to an embodiment of this application.

As shown in FIG. 15, a broadcast packet includes a significant part (significant part) and a non-significant part (non-significant part). The significant part includes one or more advertising data units (AD structures). The one or more advertising data units may be an AD structure 1, an AD structure 2, ..., an AD structure N, and the like. Each advertising data unit includes a length (length) part and a data (data) part. The length part indicates a length of a data part, and the data part includes an advertising data type (AD type) field and an advertising data (AD data) field. The advertising data type field indicates a type of advertising data, and the advertising data field is used to carry the advertising data. Optionally, a length of each broadcast packet is 31 bytes (bytes). If the significant part is less than 31 bytes, 0 is used for padding, and a part of data padded with 0 is invalid data.

Optionally, the structure of the Bluetooth broadcast packet shown in FIG. 15 may be used for both the "heartbeat broadcast packet" and the "reconnection broadcast packet". To determine whether a broadcast packet sent by the Bluetooth device 100 to the smart gateway 200 is a "heartbeat broadcast packet" or a "reconnection broadcast packet", differentiation may be performed based on different formats of AD structures in the Bluetooth broadcast packet.

Determining, based on different formats of the AD structures in the Bluetooth broadcast packets, whether the broadcast packet sent by the Bluetooth device 100 to the smart gateway 200 is a "heartbeat broadcast packet" or a "reconnection broadcast packet" may include but is not limited to the following four manners:
Manner 1: Same advertising data units (for example, the AD structures 1) are used both in the "heartbeat broadcast packet" and the "reconnection broadcast packet", but content of advertising data fields in the same advertising data units is different. Whether the broadcast packet is a "heartbeat broadcast packet" or a "reconnection broadcast packet" may be determined based on the content of the advertising data fields in the same advertising data units.
Manner 2: Same advertising data units (for example, the AD structures 1) are used both in the "heartbeat broadcast packet" and the "reconnection broadcast packet", but content of advertising data type fields in the same advertising data units is different. Whether the broadcast packet is a "heartbeat broadcast packet" or a "reconnection broadcast packet" may be determined based on the advertising data type fields in the same advertising data unit.
Manner 3: Different advertising data units are used in the "heartbeat broadcast packet" and the "reconnection broadcast packet". For example, the AD structure 1 is used in the "heartbeat broadcast packet", and the AD structure 2 is used in the "reconnection broadcast packet". Content of advertising data fields of the AD structure 1 and the AD structure 2 is different, and whether the broadcast packet is a "heartbeat broadcast packet" or a "reconnection broadcast packet" may be determined based on the content of the advertising data fields of the AD structure 1 and the AD structure 2.
Manner 4: Different advertising data units are used in the "heartbeat broadcast packet" and the "reconnection broadcast packet". For example, the AD structure 1 is used in the "heartbeat broadcast packet", and the AD structure 2 is used in the "reconnection broadcast packet". Advertising data type fields in the AD structure 1 and the AD structure 2 are different, and whether the broadcast packet is a "heartbeat broadcast packet" or a "reconnection broadcast packet" may be determined based on the advertising data type fields in the AD structure 1 and the AD structure 2.

It should be noted that whether the broadcast packet is a "heartbeat broadcast packet" or a "reconnection broadcast packet" may alternatively be determined in another manner. This is not limited in embodiments of this application.

First, specific formats of the "heartbeat broadcast packet" and the "reconnection broadcast packet" in Manner 1 are described.

FIG. 16 shows an example of a specific format of a "heartbeat broadcast packet".

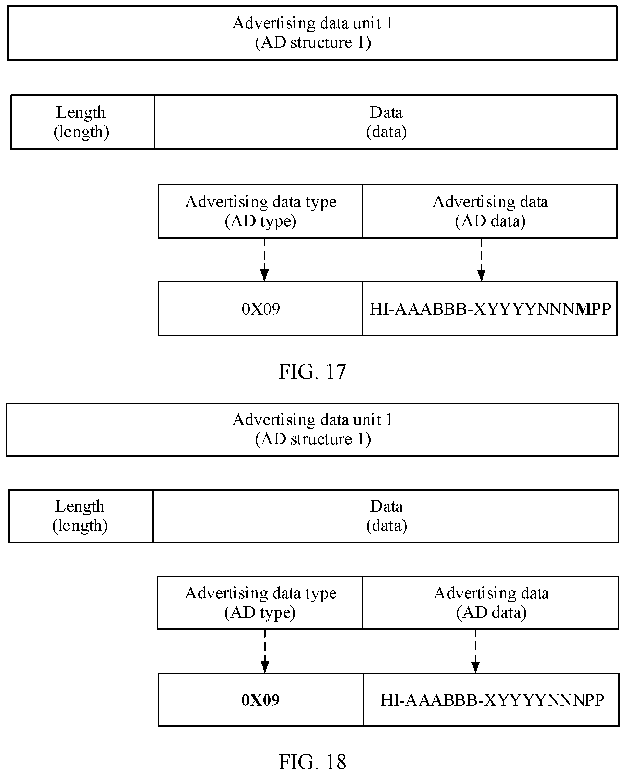

FIG. 17 shows an example of a specific format of a "reconnection broadcast packet".

In FIG. 16 and FIG. 17, same advertising data units (for example, AD structures 1) are used both in the "heartbeat broadcast packet" and the "reconnection broadcast packet". Values of advertising data type fields in the AD structures 1 in the "heartbeat broadcast packet" and the "reconnection broadcast packet" are the same. For example, the value of the advertising data type field is "0X09". Alternatively, the value of the advertising data type field may be another one. This is not limited in embodiments of this application.

In some embodiments, as shown in FIG. 16 and FIG. 17, content of an advertising data field in the "heartbeat broadcast packet" is "HI-AAABBB-XYYYYNNNPP". Content of an advertising data field in the "reconnection broadcast packet" is "HI-AAABBB-XYYYYNNNMPP". To be specific, the advertising data field in the "reconnection broadcast packet" includes a field "M", and the advertising data field in the "heartbeat broadcast packet" does not include the field "M". The field "M" identifies that a type of the broadcast packet is the "reconnection broadcast packet". A field "PP" identifies an interval for sending a broadcast packet by the Bluetooth device 100. In this case, whether the broadcast packet is a "heartbeat broadcast packet" or a "reconnection broadcast packet" may be determined based on whether the advertising data field in the broadcast packet includes the field "M". Optionally, the "reconnection broadcast packet" may not include the field "PP".

In another embodiment, content of an advertising data field in the "heartbeat broadcast packet" may be "HI-AAABBB-XYYYYNNNMPP". Content of an advertising data field in the "reconnection broadcast packet" may be "HI-AAABBB-XYYYYNNNPP". To be specific, the advertising data field in the "heartbeat broadcast packet" includes a field "M", and the advertising data field in the "reconnection broadcast packet" does not include the field "M". Optionally, the "reconnection broadcast packet" may not include a field "PP".

In another embodiment, content of advertising data fields both in the "heartbeat broadcast packet" and the "reconnection broadcast packet" may be "HI-AAABBB-XYYYYNNNMPP", and a value of a field "M" may identify whether a broadcast packet is a "heartbeat broadcast packet" or a "reconnection broadcast packet". For example, a value of the field "M" in the "heartbeat broadcast packet" is 0, and a value of the field "M" in a "reconnection broadcast packet" is 1. Optionally, the "reconnection broadcast packet" may not include a field "PP".

The following explains the fields in the advertising data fields described in the foregoing embodiment.

Specifically, a field "HI-" is a fixed prefix and occupies three bytes. The field "HI-" is padded with an ASCII code in hexadecimal of a corresponding character string. The field "HI-" identifies a broadcast developer or a broadcast flag.

Afield "AAABBB-" occupies a maximum of 10 bytes. A value of the field "AAABBB-" is padded with an ASCII code in hexadecimal of a corresponding character string (for example, a device name and a vendor name), and may include a letter, a digit, and an underscore. The field "AAABBB-" identifies a manufacturer of a device.

A field "X" occupies one byte. For example, when a value of the field "X" is 1, a corresponding hexadecimal ASCII code in hexadecimal is 0x31. The field "X" identifies a version number of a broadcast protocol.

A field "YYYY" occupies four bytes. A value of the field "YYYY" is padded with an ASCII code in hexadecimal of a corresponding character string. The field "YYYY" identifies a device type.

A field "NNNN" occupies four bytes, ranging from 0x00 to 0xFF. The field "NNNN" is padded with an ASCII code in hexadecimal of a corresponding character string. The field "NNNN" identifies the last four digits of a device serial number (serial number, SN).

The field "M" occupies one byte. The field "M" identifies whether a type of a broadcast packet is a "heartbeat broadcast packet" or a "reconnection broadcast packet".

The field "PP" occupies two bytes. A value of the field "PP" is padded with an unsigned int (unsigned integer variable) type parameter in hexadecimal. The field "PP" identifies a quantity of intervals after which the Bluetooth device sends broadcast packets, for example, 500 ms.

Next, specific formats of the "heartbeat broadcast packet" and the "reconnection broadcast packet" in Manner 2 are described.

FIG. 18 shows another example of a specific format of a "heartbeat broadcast packet".

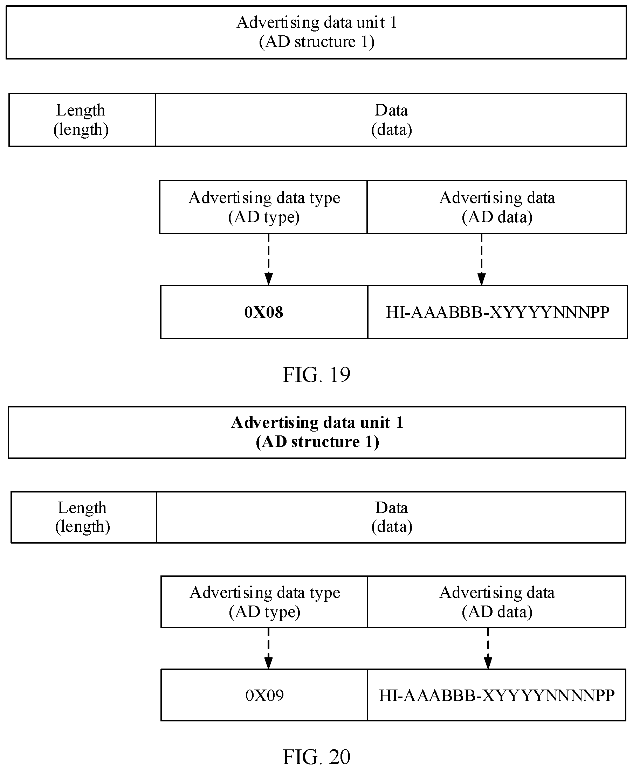

FIG. 19 shows another example of a specific format of a "reconnection broadcast packet".

In some embodiments, in FIG. 18 and FIG. 19, same advertising data units (for example, AD structures 1) are used both in the "heartbeat broadcast packet" and the "reconnection broadcast packet". Content of advertising data fields in the "heartbeat broadcast packet" and the "reconnection broadcast packet" is HI-AAABBB-XYYYYNNNPP, and values of advertising data type fields in the AD structures 1 in the "heartbeat broadcast packet" and the "reconnection broadcast packet" are different. In this case, whether a broadcast packet is a "heartbeat broadcast packet" or a "reconnection broadcast packet" may be determined based on different values of the advertising data type fields. For example, a value of the advertising data type field in the "heartbeat broadcast packet" is "0X09". A value of the advertising data type field in the "reconnection broadcast packet" is "0X08". It should be noted that the value of the advertising data type field may alternatively be another one, provided that values of the advertising data type fields in the "heartbeat broadcast packet" and the "reconnection broadcast packet" are different. This is not limited in embodiments of this application. Optionally, the "reconnection broadcast packet" may not include a field "PP".

In another embodiment, content of advertising data fields in the "heartbeat broadcast packet" and the "reconnection broadcast packet" may alternatively be of another type. For example, the content of the advertising data fields both in the "heartbeat broadcast packet" and the "reconnection broadcast packet" may alternatively be "HI-AAABBB-XYYYYNNNMPP". A value of a field "M" in the "heartbeat broadcast packet" is 0, and a value of the field "M" in the "reconnection broadcast packet" is 1. Alternatively, content of the advertising data field in the "heartbeat broadcast packet" is "HI-AAABBB-XYYYYNNNPP", and content of the advertising data field in the "reconnection broadcast packet" is "HI-AAABBB-XYYYYNNNMPP". To be specific, the "heartbeat broadcast packet" does not include a field "M", and the "reconnection broadcast packet" includes the field "M". Optionally, the advertising data field in the "reconnection broadcast packet" may not include the field "PP".

For specific explanations of fields in the advertising data field, refer to the related descriptions in the embodiments in FIG. 16 and FIG. 17. Details are not described again in this embodiment of this application.

Next, specific formats of the "heartbeat broadcast packet" and the "reconnection broadcast packet" in Manner 3 are described.

FIG. 20 shows still another example of a specific format of a "heartbeat broadcast packet".

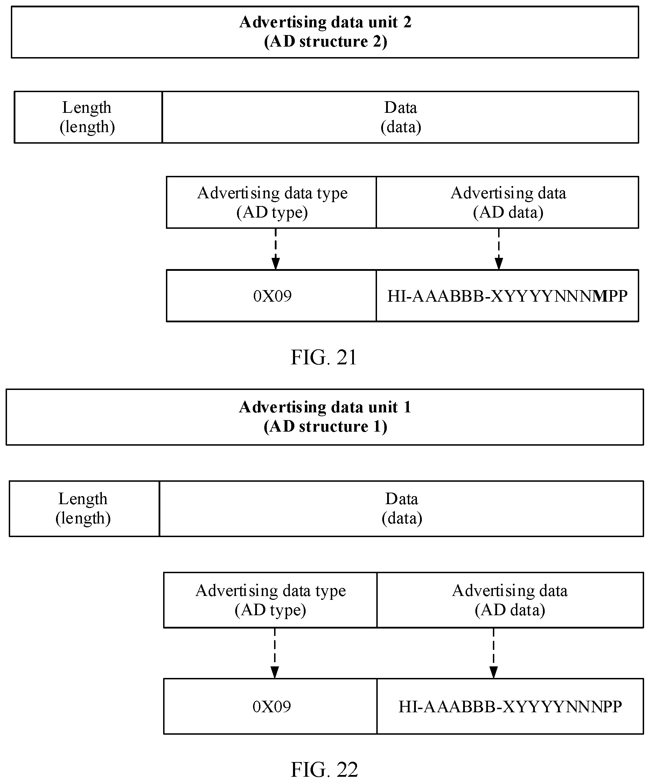

FIG. 21 shows still another example of a specific format of a "reconnection broadcast packet".

In some embodiments, as shown in FIG. 20 and FIG. 21, different advertising data units are used in the "heartbeat broadcast packet" and the "reconnection broadcast packet". For example, an AD structure 1 is used in the "heartbeat broadcast packet", and an AD structure 2 is used in the "reconnection broadcast packet". A value of the advertising data type field in the AD structure 1 is the same as a value of the advertising data type field in the AD structure 2. For example, the values of the advertising data type fields are 0X09.

A specific implementation of distinguishing between the "heartbeat broadcast packet" and the "reconnection broadcast packet" based on the advertising data field is similar to that in the embodiments in FIG. 16 and FIG. 17. FIG. 20 and FIG. 21 show a possible implementation, that is, an advertising data field in an AD structure 1 is padded with "HI-AAABBB-XYYYYNNNPP". An advertising data field in an AD structure 2 is padded with "HI-AAABBB-XYYYYNNNMPP". To be specific, the advertising data field in a "reconnection broadcast packet" includes a field "M", and the advertising data field in a "heartbeat broadcast packet" does not include the field "M". Whether a broadcast packet is a "heartbeat broadcast packet" or a "reconnection broadcast packet" may be determined based on whether the advertising data field in the broadcast packet includes the field "M". For another possible implementation of distinguishing between a "heartbeat broadcast packet" and a "reconnection broadcast packet" based on an advertising data field, refer to the descriptions in the embodiments in FIG. 16 and FIG. 17. Details are not described again in this embodiment of this application.

Next, specific formats of the "heartbeat broadcast packet" and the "reconnection broadcast packet" in Manner 4 are described.

FIG. 22 shows yet another example of a specific format of a "heartbeat broadcast packet".

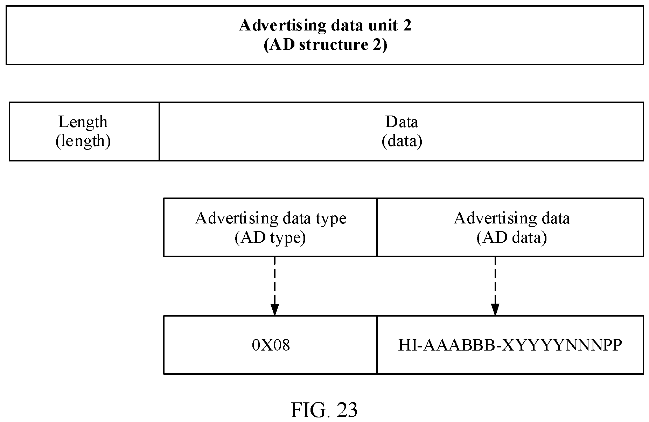

FIG. 23 shows yet another example of a specific format of a "reconnection broadcast packet".

In some embodiments, in FIG. 22 and FIG. 23, different advertising data units are used in the "heartbeat broadcast packet" and the "reconnection broadcast packet". For example, an AD structure 1 is used in the "heartbeat broadcast packet", and an AD structure 2 is used in the "reconnection broadcast packet".

A specific implementation of distinguishing between the "heartbeat broadcast packet" and the "reconnection broadcast packet" based on an advertising data type field is similar to that in the embodiments in FIG. 18 and FIG. 19. FIG. 22 and FIG. 23 show a possible implementation, that is, advertising data fields in both an AD structure 1 and an AD structure 2 are padded with same content, for example, both are padded with "HI-AAABBB-XYYYYNNNPP". A value of the advertising data type field in the AD structure 1 is 0X09, and a value of the advertising data type field in the AD structure 2 is 0X08. Whether the packet is a "heartbeat broadcast packet" or a "reconnection broadcast packet" may be determined based on different values of the advertising data type fields. For another possible implementation, refer to the descriptions in the embodiments in FIG. 18 and FIG. 19. Details are not described again in this embodiment of this application.

Optionally, the values of fields in the "heartbeat broadcast packet" and "reconnection broadcast packet" described in the foregoing may be specific values, for example, 1, 0, and 500, or may be characters having a one-to-one mapping relationship with specific values. The character may be any one of a letter, a digit, a word, and a symbol. In the following embodiments of this application, an example in which the character is a letter is used for description.

**Table 1**

| Value | Character in a one-to-one mapping relationship |
|---|---|
| 0 | A |
| 1 | B |
| 500 | C |

Table 1 shows an example of some values and characters having a one-to-one mapping relationship with the values. For example, there is a one-to-one mapping relationship between the value "0" and the character "A". There is a one-to-one mapping relationship between the value "1" and the character "B". There is a one-to-one mapping relationship between the value "500" and the character "C". It should be noted that the foregoing characters having the one-to-one mapping relationships with the values may alternatively be other characters. This is not limited in embodiments of this application.

For example, the field "PP" in the "heartbeat broadcast packet" described in the foregoing embodiments identifies an interval after which the Bluetooth device sends the "heartbeat broadcast packet", and the field "PP" is padded with a specific value, for example, 500. In other words, an interval for sending the "heartbeat broadcast packet" by the Bluetooth device 100 is 500 ms. In some embodiments, the field "PP" may alternatively not be padded with a specific value (for example, 500). If there is a one-to-one mapping relationship between the value 500 and the character "C", the Bluetooth device may use the character "C" to pad the field "PP". After receiving the "heartbeat broadcast packet" sent by the Bluetooth device 100, the smart gateway 200 may determine, based on the padding content "C" of the field "PP" in the "heartbeat broadcast packet", that an interval for sending the "heartbeat broadcast packet" by the Bluetooth device 100 is 500 ms. In this way, a length of the "heartbeat broadcast packet" can be reduced.

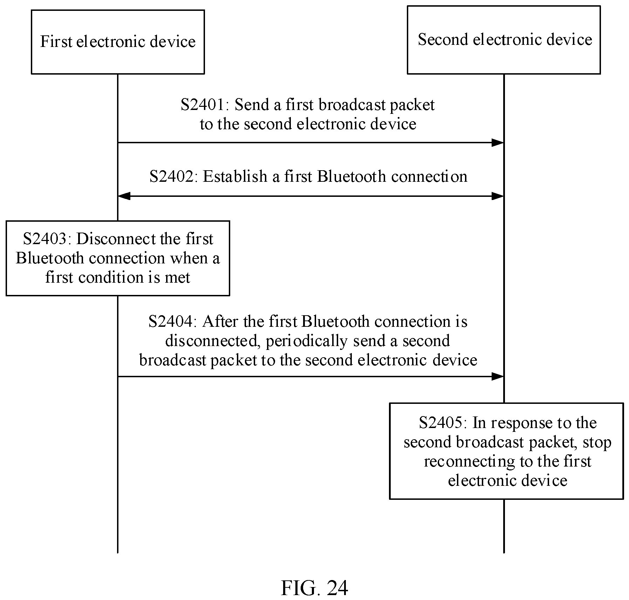

FIG. 24 is a flowchart of a method for implementing low-power-consumption operation of a Bluetooth device according to an embodiment of this application.

S2401: A first electronic device sends a first broadcast packet to a second electronic device.

The first electronic device may be a Bluetooth device 100, and the second electronic device may be a smart gateway 200.

The first broadcast packet may be referred to as a "connection establishment broadcast packet".

The first electronic device is configured to send the first broadcast packet to the second electronic device

S2402: The first electronic device establishes a first Bluetooth connection to the second electronic device.

The second electronic device is configured to: after receiving the first broadcast packet, establish the first Bluetooth connection to the first electronic device based on the first broadcast packet.

The first Bluetooth connection may be a persistent Bluetooth connection between the first electronic device and the second electronic device.

For how the first electronic device establishes the first Bluetooth connection to the second electronic device, refer to the descriptions in the embodiment in FIG. 1. Details are not described again in this embodiment of this application.

S2403: The first electronic device disconnects the first Bluetooth connection to the second electronic device when a first condition is met.

The first electronic device is further configured to disconnect the first Bluetooth connection when the first condition is met.

S2404: After the first Bluetooth connection is disconnected, the first electronic device periodically sends a second broadcast packet to the second electronic device.

The second broadcast packet may be referred to as a "heartbeat broadcast packet".

The first electronic device is further configured to: after the first Bluetooth connection is disconnected, periodically send the second broadcast packet to the second electronic device. The second broadcast packet carries a first interval value, and the first interval value indicates an interval for sending the second broadcast packet by the first electronic device.

S2405: In response to the second broadcast packet, the second electronic device stops reconnecting to the first electronic device.

The second electronic device is further configured to: in response to the second broadcast packet, stop reconnecting to the first electronic device.

According to the method, the first electronic device actively disconnects the Bluetooth connection to the second electronic device when the first condition is met, to reduce power consumption of the first electronic device, thereby achieving an objective of energy saving. After the Bluetooth connection is disconnected, the first electronic device periodically sends the second broadcast packet to the second electronic device, to notify the second electronic device that the first electronic device is still connectable at this moment. This implements device keepalive. The second electronic device does not need to reconnect to the first electronic device.

In a possible implementation, the second electronic device is further configured to: after receiving the second broadcast packet sent by the first electronic device, obtain a first instruction. The first instruction indicates the second electronic device to reconnect to a smart device. The second electronic device is further configured to establish a second Bluetooth connection to the first electronic device based on the second broadcast packet that is sent by the first electronic device again and that is received after the first instruction is received.

In this way, after receiving a control instruction of a user, the second electronic device may establish the second Bluetooth connection to the first electronic device based on the second broadcast packet that is sent by the first electronic device to implement keepalive and that is received after the first instruction is received, so that the second electronic device actively reconnects to the first electronic device.

For how the second electronic device actively reconnects to the first electronic device, refer to the descriptions in the embodiment in FIG. 14. Details are not described again in this embodiment of this application.

Optionally, after the second electronic device receives a control instruction of a user, the second electronic device may establish the second Bluetooth connection to the first electronic device based on the second broadcast packet that is sent by the first electronic device to implement keepalive and that is received before the first instruction is received, to reduce duration in which the second electronic device waits for the first electronic device to send the second broadcast packet sent again.

In a possible implementation, the first electronic device is further configured to: after sending the second broadcast packet to the second electronic device, send a third broadcast packet to the second electronic device. The third broadcast packet carries a first reconnection identifier, and the first reconnection identifier indicates the second electronic device to establish a Bluetooth connection to the first electronic device. The second electronic device is further configured to: in response to the third broadcast packet, establish a second Bluetooth connection to the first electronic device.

The third broadcast packet may be referred to as a "reconnection broadcast packet".

In this way, the first electronic device may actively send the third broadcast packet to the second electronic device, to request to reconnect to the second electronic device.

For how the first electronic device actively requests to reconnect to the second electronic device, refer to the descriptions in the embodiment in FIG. 13. Details are not described again in this embodiment of this application.

In a possible implementation, the first electronic device is further configured to: after establishing the second Bluetooth connection to the second electronic device, stop sending the second broadcast packet.

In this way, the first electronic device sends the second broadcast packet to the second electronic device only after the first electronic device disconnects the Bluetooth connection to the second electronic device, to implement device keepalive.

In a possible implementation, the first electronic device is further configured to: When the first condition is met and a second condition is met, the first electronic device periodically sends a fourth broadcast packet to the second electronic device. The fourth broadcast packet carries a second interval value, and the second interval value indicates an interval for sending the fourth broadcast packet by the first electronic device. The second interval is different from the first interval.

The fourth broadcast packet may be referred to as a "heartbeat broadcast packet".

It should be noted that at least one of features carried in the first broadcast packet, the second broadcast packet, the third broadcast packet, and the fourth broadcast packet is different. For example, the feature may be an interval value for sending a broadcast packet, a heartbeat identifier, or a reconnection identifier. The feature is used to distinguish between functions of different broadcast packets in different scenarios.

For a plurality of broadcast packets having a same function in a same scenario, for example, a plurality of second broadcast packets, information carried, for example, timestamps for sending the broadcast packets, in the plurality of broadcast packets may not be completely the same.

In this way, after the first electronic device disconnects the Bluetooth connection to the second electronic device, the first electronic device may adjust an interval that is for sending the broadcast packet and that is to implement device keepalive, to reduce the power consumption of the first electronic device, thereby achieving the objective of energy saving.

In a possible implementation, the second condition includes any one or more of the following: a battery level of the first electronic device meets a preset condition, load of the first electronic device meets a preset condition, and remaining memory of the first electronic device meets a preset condition.

Optionally, in a case in which the second interval value is greater than the first interval value, the second condition includes any one or more of the following: a battery level of the first electronic device is lower than a preset value, load of the first electronic device is higher than a preset value, and remaining memory of the first electronic device is lower than a preset value. In this way, the first electronic device can prolong the interval that is for sending the broadcast packet and that is to implement device keepalive, to reduce the power consumption of the first electronic device, thereby achieving the objective of energy saving.

Optionally, in a case in which the second interval value is less than the first interval value, the second condition includes any one or more of the following: a battery level of the first electronic device is higher than a preset value, load of the first electronic device is lower than a preset value, and remaining memory of the first electronic device is higher than a preset value. In this way, the first electronic device can shorten the interval that is for sending the broadcast packet and that is to implement device keepalive. When the second electronic device needs to actively reconnect to the first electronic device, duration in which the second electronic device waits for the first electronic device to send the broadcast packet can be reduced.

Optionally, the second condition may alternatively be that a user performs a manual operation to enable the first electronic device to adjust the interval for sending the broadcast packet to implement device keepalive. For details, refer to the descriptions in the embodiments in FIG. 12A and FIG. 12B. Details are not described again in this embodiment of this application.

In a possible implementation, the first condition includes: within a preset time period, the first electronic device does not send usage data to the second electronic device, or the second electronic device does not send a control instruction to the first electronic device.

Optionally, the first condition may alternatively be that a user performs a manual operation to disconnect the Bluetooth connection between the first electronic device and the second electronic device. For details, refer to the descriptions in the embodiments in FIG. 10A to FIG. 10C and FIG. 11A and FIG. 11B. Details are not described again in this embodiment of this application.

In a possible implementation, the second broadcast packet includes a first heartbeat identifier.

With reference to the third aspect, in a possible implementation, the third broadcast packet includes a first field. A value of the first field is a first value, and the first value indicates the first reconnection identifier in the third broadcast packet.

The second broadcast packet includes the first field. A value of the first field is a second value, and the second value indicates the first heartbeat identifier in the second broadcast packet. The second value is different from the first value.

Optionally, the first field may be a field "M".

For formats of the second broadcast packet and the third broadcast packet, refer to the descriptions in the embodiments in FIG. 16 to FIG. 23. Details are not described again in this embodiment of this application.

The implementations of this application may be randomly combined to achieve different technical effects.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on the computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random-access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A method for implementing low-power-consumption operation of a Bluetooth device, wherein the method comprises:
sending, by a first electronic device, a first broadcast packet to a second electronic device, wherein the first broadcast packet is used to establish a first Bluetooth connection to the second electronic device;
after the first electronic device establishes the first Bluetooth connection to the second electronic device, disconnecting, by the first electronic device, the first Bluetooth connection when a first condition is met; and
after the first Bluetooth connection is disconnected, periodically sending, by the first electronic device, a second broadcast packet to the second electronic device, wherein
the second broadcast packet carries a first interval value, and the first interval value indicates an interval for sending the second broadcast packet by the first electronic device.

2. The method according to claim 1, wherein after the periodically sending, by the first electronic device, a second broadcast packet to the second electronic device, the method further comprises:
sending, by the first electronic device, a third broadcast packet to the second electronic device, wherein the third broadcast packet carries a first reconnection identifier, and the first reconnection identifier indicates the second electronic device to establish a second Bluetooth connection to the first electronic device.

3. The method according to claim 2, wherein after the first electronic device establishes the second Bluetooth connection to the second electronic device, the method further comprises:
stopping, by the first electronic device, sending the second broadcast packet.

4. The method according to claim 1 or 2, wherein after the periodically sending, by the first electronic device, a second broadcast packet to the second electronic device, the method further comprises:
when the first condition is met and a second condition is met, periodically sending, by the first electronic device, a fourth broadcast packet to the second electronic device, wherein the fourth broadcast packet carries a second interval value, and the second interval value indicates an interval for sending the fourth broadcast packet by the first electronic device, wherein
the second interval value is different from the first interval value.

5. The method according to claim 4, wherein the second condition comprises any one or more of the following: a battery level of the first electronic device meets a preset condition, load of the first electronic device meets a preset condition, and remaining memory of the first electronic device meets a preset condition.

6. The method according to any one of claims 1 to 5, wherein the first condition comprises:
within a preset time period, the first electronic device does not send usage data to the second electronic device, or the second electronic device does not send a control instruction to the first electronic device.

7. The method according to any one of claims 1 to 6, wherein the second broadcast packet comprises a first heartbeat identifier.

8. The method according to claim 7, wherein the third broadcast packet comprises a first field, a value of the first field is a first value, and the first value indicates the first reconnection identifier in the third broadcast packet; and
the second broadcast packet comprises the first field, a value of the first field is a second value, the second value indicates the first heartbeat identifier in the second broadcast packet, and the second value is different from the first value.

9. A method for implementing low-power-consumption operation of a first electronic device, wherein the method comprises:
receiving, by a second electronic device, a first broadcast packet sent by the first electronic device;
establishing, by the second electronic device, a first Bluetooth connection to the first electronic device based on the first broadcast packet;
disconnecting, by the second electronic device, the first Bluetooth connection to the first electronic device when a first condition is met;
after the first Bluetooth connection is disconnected, receiving, by the second electronic device, a second broadcast packet periodically sent by the first electronic device, wherein the second broadcast packet carries a first interval value, and the first interval value indicates an interval for sending the second broadcast packet by the first electronic device; and
in response to the second broadcast packet, stopping, by the second electronic device, reconnecting to the first electronic device.

10. The method according to claim 9, wherein after the receiving, by the second electronic device, a second broadcast packet periodically sent by the first electronic device, the method further comprises:
obtaining, by the second electronic device, a first instruction, wherein the first instruction indicates the second electronic device to reconnect to the first electronic device; and
in response to the first instruction, establishing, by the second electronic device, a second Bluetooth connection to the first electronic device based on the second broadcast packet that is sent by the first electronic device again and that is received after the first instruction is received.

11. The method according to claim 9, wherein after the receiving, by the second electronic device, a second broadcast packet periodically sent by the first electronic device, the method further comprises:
receiving, by the second electronic device, a third broadcast packet sent by the first electronic device, wherein the third broadcast packet carries a first reconnection identifier, and the first reconnection identifier indicates the second electronic device to establish a Bluetooth connection to the first electronic device; and
in response to the third broadcast packet, establishing, by the second electronic device, a second Bluetooth connection to the first electronic device.

12. The method according to any one of claims 9 to 11, wherein after the receiving, by the second electronic device, a second broadcast packet periodically sent by the first electronic device, the method further comprises:
when the first condition is met and a second condition is met, receiving, by the second electronic device, a fourth broadcast packet periodically sent by the first electronic device, wherein the fourth broadcast packet carries a second interval value, and the second interval value indicates an interval for sending the fourth broadcast packet by the first electronic device, wherein
the second interval is different from the first interval.

13. The method according to claim 12, wherein the second condition comprises any one or more of the following: a battery level of the first electronic device meets a preset condition, load of the first electronic device meets a preset condition, and remaining memory of the first electronic device meets a preset condition.

14. The method according to any one of claims 9 to 13, wherein the first condition comprises:
within a preset time period, the first electronic device does not send usage data to the second electronic device, or the second electronic device does not send a control instruction to the first electronic device.

15. The method according to any one of claims 9 to 14, wherein the second broadcast packet comprises a first heartbeat identifier.

16. The method according to claim 15, wherein the third broadcast packet comprises a first field, a value of the first field is a first value, and the first value indicates the first reconnection identifier in the third broadcast packet; and
the second broadcast packet comprises the first field, a value of the first field is a second value, the second value indicates the first heartbeat identifier in the second broadcast packet, and the second value is different from the first value.

17. A system for implementing low-power-consumption operation of a first electronic device, wherein the system comprises the first electronic device and a second electronic device;
the first electronic device is configured to send a first broadcast packet to the second electronic device;
the second electronic device is configured to: after receiving the first broadcast packet, establish a first Bluetooth connection to the first electronic device based on the first broadcast packet;
the first electronic device is further configured to disconnect the first Bluetooth connection when a first condition is met;
the first electronic device is further configured to: after the first Bluetooth connection is disconnected, periodically send a second broadcast packet to the second electronic device, wherein the second broadcast packet carries a first interval value, and the first interval value indicates an interval for sending the second broadcast packet by the first electronic device; and
the second electronic device is further configured to: in response to the second broadcast packet, stop reconnecting to the first electronic device.

18. The system according to claim 17, wherein the second electronic device is further configured to: after receiving the second broadcast packet sent by the first electronic device, obtain a first instruction, wherein the first instruction indicates the second electronic device to reconnect to the first electronic device; and
the second electronic device is further configured to establish a second Bluetooth connection to the first electronic device based on the second broadcast packet that is sent by the first electronic device again and that is received after the first instruction is received.

19. The system according to claim 17, wherein the first electronic device is further configured to: after sending the second broadcast packet to the second electronic device, send a third broadcast packet to the second electronic device, wherein the third broadcast packet carries a first reconnection identifier, and the first reconnection identifier indicates the second electronic device to establish a Bluetooth connection to the first electronic device; and
the second electronic device is further configured to: in response to the third broadcast packet, establish a second Bluetooth connection to the first electronic device.

20. The system according to claim 18 or 19, wherein the first electronic device is further configured to: after establishing the second Bluetooth connection to the second electronic device, stop sending the second broadcast packet.

21. The system according to any one of claims 17 to 19, wherein the first electronic device is further configured to:
when the first condition is met and a second condition is met, periodically send, by the first electronic device, a fourth broadcast packet to the second electronic device, wherein the fourth broadcast packet carries a second interval value, and the second interval value indicates an interval for sending the fourth broadcast packet by the first electronic device, wherein
the second interval is different from the first interval.

22. The system according to claim 21, wherein the second condition comprises any one or more of the following: a battery level of the first electronic device meets a preset condition, load of the first electronic device meets a preset condition, and remaining memory of the first electronic device meets a preset condition.

23. The system according to any one of claims 17 to 22, wherein the first condition comprises:
within a preset time period, the first electronic device does not send usage data to the second electronic device, or the second electronic device does not send a control instruction to the first electronic device.

24. The system according to any one of claims 17 to 23, wherein the second broadcast packet comprises a first heartbeat identifier.

25. The system according to claim 24, wherein the third broadcast packet comprises a first field, a value of the first field is a first value, and the first value indicates the first reconnection identifier in the third broadcast packet; and
the second broadcast packet comprises the first field, a value of the first field is a second value, the second value indicates the first heartbeat identifier in the second broadcast packet, and the second value is different from the first value.

26. An electronic device, wherein the electronic device is a first electronic device, the first electronic device comprises one or more processors and one or more memories, the one or more memories are coupled to the one or more processors, the one or more memories are configured to store computer program code, the computer program code comprises computer instructions, and the one or more processors invoke the computer instructions, so that the first electronic device is enabled to perform the method according to any one of claims 1 to 8.

27. An electronic device, wherein the electronic device is a second electronic device, the second electronic device comprises one or more processors and one or more memories, the one or more memories are coupled to the one or more processors, the one or more memories are configured to store computer program code, the computer program code comprises computer instructions, and the one or more processors invoke the computer instructions, so that the second electronic device is enabled to perform the method according to any one of claims 9 to 16.

28. A computer-readable storage medium, comprising instructions, wherein when the instructions are run on a first electronic device, the first electronic device is enabled to perform the method according to any one of claims 1 to 8.

29. A computer-readable storage medium, comprising instructions, wherein when the instructions are run on a second electronic device, the second electronic device is enabled to perform the method according to any one of claims 9 to 16.

30. A computer program product, wherein when the computer program product runs on a first electronic device, the first electronic device is enabled to perform the method according to any one of claims 1 to 8.

31. A computer program product, wherein when the computer program product runs on a second electronic device, the second electronic device is enabled to perform the method according to any one of claims 9 to 16.
